# EUROPÄISCHE PATENTSCHRIFT

(11) **EP 0 410 276 B1**
(45) Veröffentlichungstag und Bekanntmachung des Hinweises auf die Patenterteilung: **11.05.1994**
(21) Anmeldenummer: 90113710.9
(22) Anmeldetag: 18.07.1990
(51) Int. Cl.: C08F 283/00, C08F 299/06, C09D 151/08, G03F 7/035

(54) **Pfropfpolymerisat mit ungesättigten Seitenketten, dieses enthaltendes lichtempfindliches Gemisch sowie daraus hergestelltes Aufzeichnungsmaterial**
Graft polymer with unsaturated side groups, light-sensitive mixture containing same and recording material made from same
Polymère greffé comprenant des groupes insaturés latéraux, mélange sensible à la lumière comprenant celui-ci et matériaux d'enregistrement le comprenant

(30) Priorität: 27.07.1989 DE 3924811
(43) Veröffentlichungstag der Anmeldung: 30.01.1991
(73) Patentinhaber: HOECHST AKTIENGESELLSCHAFT, 65926 Frankfurt am Main (DE)
(72) Erfinder: Müller-Hess, Waltraud, Dr., D-6200 Wiesbaden-Breckenheim (DE); Mohr, Dieter, Dr., D-6501 Budenheim (DE); Kroggel, Matthias, Dr., D-6233 Kelkheim (DE)

(56) Entgegenhaltungen:
- EP-A- 0 079 514
- EP-A- 0 364 939
- EP-A- 0 374 706
- WPIL, FILE SUPPLIER, AN=87-339611 [48], Derwent Publications Ltd, London, GB;& JP-A-62 246 047 (KURARAY) 27-10-1987

## Beschreibung

Die Erfindung betrifft ein Pfropfpolymerisat mit ethylenisch ungesättigten, polymerisierbaren oder vernetzbaren Seitenketten und ein lichthärtbares, mit wäßrigen Lösungen entwickelbares Gemisch, das das Pfropfpolymerisat und eine lichtempfindliche Substanz enthält. Das Gemisch ist zur Herstellung von lichtempfindlichen Aufzeichnungsmaterialien, insbesondere von Flachdruckplatten und Photoresists, geeignet.

Aus der US-A 2 929 710, der GB-A 834 337 und der DE-A 15 22 359 ist es bekannt, in photopolymerisierbaren Mischungen Derivate von Polyvinylalkoholen einzusetzen, die seitenständige polymerisierbare Doppelbindungen enthalten. Bei diesen polymerisierbare Gruppen enthaltenden Derivaten des Polyvinylalkohols handelt es sich z. B. um ungesättigte Polyvinylacetale oder ungesättigte Polyvinylester. Die in den genannten Druckschriften beschriebenen Polyvinylalkoholderivate eignen sich wegen des relativ großen Anteils an Verunreinigungen nur sehr beschränkt für den Einsatz in photopolymerisierbaren Aufzeichnungsmaterialien. Darüber hinaus sind die Vinylalkoholeinheiten so weitgehend umgesetzt, daß die Schichten nach der bildmäßigen Belichtung mit organischen Lösemitteln entwickelt werden müssen und somit nicht mehr den heutigen Anforderungen entsprechen.

Für die mit wäßrigen Lösungen entwickelbaren Druckplatten, wie sie in der GB-A 834 337, den US-A 3 877 939 und 4 247 624 sowie den DE-A 31 28 949, 31 44 905 und 33 22 994 beschrieben werden, werden solche Polyvinylalkoholderivate verwendet, die nur einen kleinen Mengenanteil an umgesetzten Vinylalkoholeinheiten enthalten. Dadurch werden relativ spröde Druckformen erhalten, deren Druckauflage demzufolge niedrig ist. Die zur Wasserentwickelbarkeit notwendige Hydrophilie der Bindemittel bleibt auch nach der Vernetzung erhalten. Dies führt zum Quellen beim Entwicklungsvorgang und zu einer Überempfindlichkeit beim Auswaschen. Feine Bildelemente sind mit diesen Aufzeichnungsmaterialien vielfach nur schwer zu reproduzieren.

Ferner kommt es bei den bekannten, mit wäßrigen Lösungen entwickelbaren Aufzeichnungsmaterialien leicht zu Restschichtbildungen bei der Entwicklung, d.h. die bei der bildmäßigen Belichtung nicht vernetzten bzw. nicht polymerisierten Anteile der Aufzeichnungsschicht lassen sich nicht restlos und einwandfrei vom Träger entfernen. Diese Erscheinung, die insbesondere bei Einsatz von metallischen Schichtträgern für die lichthärtbare Aufzeichnungsschicht auftritt, ist vor allem bei der Herstellung von Resistmustern und Flachdruckplatten hinderlich.

Aus der EP-A 0 248 424 und 0 248 395 sind mit wäßrigalkalischen Entwicklerlösungen auswaschbare photopolymerisierbare Aufzeichnungsmaterialien für die Herstellung von Druckplatten bekannt, die als Bindemittel carboxylgruppenhaltige Copolymere enthalten, in denen COOH-Gruppen durch Veresterung mit Glycidyl(meth)acrylat umgesetzt worden sind. Diese Modifizierung senkt jedoch einerseits die Säurezahl des Binders und damit die Entwickelbarkeit der Druckplatte, zum anderen wird die Glastemperatur des Bindemittels erniedrigt, wodurch die Druckauflage negativ beeinflußt wird.

In der DE-A 37 32 089 werden Pfropfpolymerisate beschrieben, die aus einem Polyurethan als Pfropfgrundlage und aufgepfropften Vinylestereinheiten bestehen, die mindestens teilweise zu Vinylalkoholeinheiten verseift sind. Die Polymeren werden als Bindemittel für Pigmente, zur Herstellung von Druckfarben, von Schmelzklebern, von lösemittelhaltigen Klebstoffen, als Bestandteil von Lacken oder Beschichtungsmitteln für Fasern, Folien und Metalle und für thermoplastische Formkörper eingesetzt.

In der älteren deutschen Patentanmeldung P 38 35 840.9 (DE-A-3 835 840) werden Pfropfpolymerisate beschrieben, die aus den in der DE-A 37 32 089 beschriebenen Pfropfpolymerisaten durch Acetalisieren mit gesättigten aliphatischen oder aromatischen Aldehyden erhalten werden.

In der älteren deutschen Patentanmeldung P 39 20 229.1 (≙EP-A-4 065 99) werden photopolymerisierbare Gemische beschrieben, die als Bindemittel die in der P 38 35 840.9 beschriebenen Pfropfpolyvinylacetale enthalten.

Der vorliegenden Erfindung lag die Aufgabe zugrunde, durch Belichten in Gegenwart von Photoinitiatoren polymerisierbare oder vernetzbare Polymere und diese Polymere enthaltende lichthärtbare Gemische für die Herstellung von Druckplatten, besonders Flachdruckplatten, und Photoresists bereitzustellen, die sich nach bildmäßiger Belichtung mit Wasser oder wäßrigen Lösungen entwickeln lassen und die im belichteten Zustand eine hohe Beständigkeit gegenüber wäßrigen Verarbeitungslösungen aufweisen. Die Gemische und daraus herzustellende Aufzeichnungsmaterialien sollten ferner einfach herstellbar sein, eine höhere Lichtempfindlichkeit als bekannte, analog aufgebaute Materialien haben, hohe Bildauflösung und hohe Druckauflagen ergeben.

Erfindungsgemäß wird ein Pfropfpolymerisat vorgeschlagen, das aus einem Polyurethan als Pfropfgrundlage und aufgepfropften Ketten besteht, die Vinylalkoholeinheiten und Einheiten mit seitenständigen polymerisierbaren oder vernetzbaren Doppelbindungen enthalten.

Erfindungsgemäß wird ferner ein lichthärtbares Gemisch vorgeschlagen, das als wesentliche Bestandteile ein Polymeres mit ethylenisch ungesättigten polymerisierbaren oder vernetzbaren Seitenketten und eine lichtempfindliche Substanz enthält.

Das erfindungsgemäße Gemisch ist dadurch gekennzeichnet, daß das Polymere ein Pfropfpolymerisat der vorstehend angegebenen Zusammensetzung ist.

Erfindungsgemäß wird schließlich auch ein lichthärtbares Aufzeichnungsmaterial mit einem Schichtträger und einer lichtempfindlichen Aufzeichnungsschicht vorgeschlagen, das dadurch gekennzeichnet ist, daß die Schicht aus einem Gemisch der vorstehend angegebenen Zusammensetzung besteht.

Bevorzugte Ausführungsformen sind in den abhängigen Ansprüchen beschrieben.

Die erfindungsgemäßen Pfropfmischpolymerisate sind neu. Zu ihrer Herstellung wird auf eine Pfropfgrundlage aus einem Polyurethan ein Carbonsäurevinylester und ggf. eine weitere damit copolymerisierbare ethylenisch ungesättigte Verbindung aufgepfropft und danach ganz oder teilweise verseift. Die dabei erhaltenen Polymeren mit Vinylalkoholeinheiten, die aus der DE-A 37 32 089 bekannt sind, werden weiter mit aktivierten Verbindungen, die polymerisierbare Doppelbindungen enthalten, zu den erfindungsgemäßen Verbindungen umgesetzt. Vor oder nach der Einführung der ungesättigten Gruppen kann das Polymere mit gesättigten aliphatischen oder aromatischen Aldehyden oder Carbonsäuren acetalisiert oder acyliert werden.

Die Pfropfgrundlagen bestehen aus Polyurethanen mit mindestens zwei Urethangruppen im Molekül, wobei die Anzahl der Urethangruppen pro Molekül nach oben keiner besonderen Begrenzung unterliegt und im allgemeinen höhere Werte als 2 hat.

Die als Pfropfgrundlage eingesetzten Polyurethane lassen sich nach üblichen Verfahren der Polyurethansynthese aus Diolen und Diisocyanaten herstellen. Bevorzugt werden cycloaliphatische Diole, wie Cyclohexandiole, sowie insbesondere aliphatische Diole mit 2 bis 12 C-Atomen. Bevorzugt werden ferner Polyetherdiole, z. B. Polypropylenoxide, Polybutylenoxide, Mischpolymere aus Ethylenoxid, Propylenoxid, Butylenoxid, vorzugsweise deren Blockcopolymere, oder Poly-1,4-butandiole; bevorzugt werden Polyethylenoxide, besonders solche mit Molekulargewichten zwischen 200 und 10 000, insbesondere zwischen 400 und 1500. Die Polyetherdiole werden mit Vorteil in Kombination mit niedermolekularen aliphatischen Diolen, z. B. 1,4-Butandiol, 1,3-Propandiol, Ethylenglykol, Diethylenglykol, 1,2-Hexandiol, 1,2-Propandiol, Pentandiol oder Cyclohexandiol eingesetzt. Bevorzugt liegt ein molares Verhältnis von Polyetherdiol zu niedermolekularem aliphatischem Diol von 1 : 0,1 bis 1 : 0,7 vor.

Als Diisocyanatkomponenten können aromatische Diisocyanate eingesetzt werden. Bevorzugt werden aliphatische und/oder cycloaliphatische Diisocyanate. Bevorzugte aliphatische Diisocyanate sind solche mit 2 bis 12 C-Atomen im aliphatischen Rest, z. B. Ethylendiisocyanat, Propylendiisocyanat, Tetramethylendiisocyanat, 2,2,4-Trimethyl-hexamethylendiisocyanat. Bevorzugte cycloaliphatische Diisocyanate sind z. B. 1,4-Diisocyanato-cyclohexan, Dicyclohexylmethan-4,4′-diisocyanat und Isophorondiisocyanat. Besonders bevorzugt werden Hexamethylendiisocyanat und Isophorondiisocyanat.

Das Molverhältnis von Diol- zu Diisocyanatkomponente liegt vorzugsweise zwischen 1 : 0,99 und 1 : 0,5, insbesondere zwischen 1 : 0,98 und 1 : 0,7. Die mittleren Molekulargewichte der Polyurethane liegen vorzugsweise zwischen 200 und 100 000, insbesondere zwischen 1 000 und 50 000, besonders bevorzugt zwischen 3 000 und 25 000.

Zum Pfropfen auf das Polyurethan werden Carbonsäurevinylester mit 3 bis 20, vorzugsweise 4 bis 14 C-Atomen eingesetzt. Besonders bevorzugt werden Vinylacetat und/oder Vinylpropionat, insbesondere Vinylacetat. Bevorzugt werden ferner Gemische aus Vinylacetat und/oder Vinylpropionat und Vinylversatat. Insbesondere bei Teil- oder Vollverseifung der Produkte im Anschluß an die Pfropfpolymerisation ist beim Pfropfen die Mitverwendung von Vinylpropionat neben Vinylacetat vorteilhaft. Außerdem lassen sich copolymerisierbare Gemische aus Vinylcarbonsäureestern pfropfen, vorzugsweise Gemische aus Vinylacetat und kleineren Mengen Vinylversatat.

Auch das Pfropfen mit verschiedenen Carbonsäurevinylestern in Form von Blockcopolymeren kann vorteilhaft sein. Weiterhin können die Carbonsäurevinylester auch zusammen mit anderen ethylenisch ungesättigten und copolymerisierbaren Monomeren, insbesondere Säuren, wie Maleinsäure, Itaconsäure, Mesaconsäure, Crotonsäure, Acrylsäure, oder deren Estern, gepfropft werden.

Der Mengenanteil der aufgepfropften Komponenten beträgt im allgemeinen 10 bis 95, vorzugsweise 30 bis 90 und insbesondere 40 bis 80 Gew.-%, bezogen auf das gesamte Pfropfpolymerisat.

Die erhaltenen Pfropfpolymerisate lassen sich durch Hydrolyse, Alkoholyse oder Umesterung verseifen, wobei der Hydrolysegrad mindestens 30 mol-%, vorzugsweise 45 bis 99 mol-%, bezogen auf die Molzahl verseifbarer Monomereinheiten im Pfropfpolymerisat, beträgt. Die Herstellung der Pfropfpolymerisate mit Polyurethan-Pfropfgrundlage und ihre Verseifung ist in der DE-A 37 32 089 beschrieben.

Die Einführung der polymerisierbaren Seitengruppen kann durch Umsetzung der freien OH-Gruppen des Pfropfpolymeren in jeder beliebigen und bekannten Art und Weise erfolgen. Für den erfindungsgemäßen Einsatz haben sich jedoch diejenigen Polymeren als besonders günstig erwiesen, in die die ungesättigten Seitengruppen durch Veresterung, Veretherung oder Urethanbildung eingeführt worden sind. Die Umsetzungen können in homogener oder heterogener Phase durchgeführt werden.

Polymere mit über Etherbindungen verknüpften olefinisch ungesättigten Seitengruppen erhält man beispielsweise durch Veretherung der OH-Gruppen mit hydroxylgruppenhaltigen Derivaten von α,β-ungesättigten Carbonsäuren, z. B. N-Methylol-(meth)acrylamid, N-(3-Hydroxy-2,2-dimethylpropyl)-(meth)acrylamid, N-(2,2,2-Trichlor-1-hydroxyethyl)-(meth)acrylamid, Hydroxyalkyl-(meth)acrylaten, wie β-Hydroxyethyl-(meth)acrylat oder β-Hydroxypropyl(meth)acrylat.

Eine typische Veretherungsreaktion in homogener Phase wird folgendermaßen durchgeführt. Das Vinylalkoholeinheiten enthaltende Polymere wird in einem Lösemittel aufgenommen. Bevorzugte Lösemittel sind je nach Art des Polymeren z. B. N-Methylpyrrolidon oder Butanon. Der Feststoffgehalt der Lösung beträgt bevorzugt 5 bis 50 %. Zu dieser Lösung werden nacheinander das Derivat der α,β-ungesättigten Carbonsäure, ein Katalysator (z. B. Phosphorsäure) und gegebenenfalls ein Inhibitor für die thermische Polymerisation gegeben. Die Reaktionszeit beträgt 5 bis 48 Stunden bei Temperaturen zwischen 30 und 140 °C. Die Reaktionsführung in heterogener Phase entspricht der obigen. In diesem Falle sollte lediglich auf eine feine Verteilung des Pfropfpolymeren geachtet werden.

Die Veretherung kann auch mit Verbindungen, die Oxiranringe enthalten, z. B. mit Glycidyl(meth)acrylat durchgeführt werden. Als Katalysatoren für diese Reaktion werden bevorzugt basische Verbindungen, wie Trialkylamine, basisches Aluminiumoxid, Dimethylaminopyridin, N-Methylimidazol, Tetrabutylammoniumiodid u.a. eingesetzt. Die Umsetzung wird bei Temperaturen zwischen 20 und 120 °C innerhalb von 2 bis 40 Stunden durchgeführt.

Zur Anknüpfung der polymerisierbaren Seitengruppen durch Urethanbildung werden bevorzugt isocyanatgruppenhaltige Derivate von α,β-ungesättigten Carbonsäuren, wie Isocyanatoalkyl(meth)acrylate eingesetzt. Die Umsetzung wird in Lösung oder Dispersion durchgeführt, wobei der Feststoffanteil zwischen 5 und 50 % liegt. Das Derivat der α,β-ungesättigten Carbonsäure, ein thermischer Polymerisationsinhibitor und ein geeigneter Katalysator, z. B. Dibutylzinndilaurat oder einfache basische Verbindungen, werden zugegeben, und die Mischung wird 2 bis 40 Stunden auf 20 bis 100 °C erwärmt.

Die Einführung der polymerisierbaren Doppelbindungen in das Polymere durch Veresterung ist das gebräuchlichste Verfahren. Bevorzugte Reaktionspartner der Vinylalkoholpolymeren sind Anhydride oder Halogenide α,β-ungesättigter Carbonsäuren mit 3 bis 10, insbesondere 3 oder 4 C-Atomen, z. B. (Meth)acrylsäureanhydrid, Crotonsäureanhydrid, Maleinsäureanhydrid oder (Meth)acrylsäurechlorid, wobei Reste mit endständigen Doppelbindungen bevorzugt werden. Als Veresterungskatalysatoren werden zweckmäßig tertiäre Amine eingesetzt. Als Löse- oder Dispergiermittel finden niedere aliphatische Ketone, Kohlenwasserstoffe, Fünf- oder Sechsringlactone oder -lactame oder Ether Verwendung. Die Reaktionstemperatur liegt im allgemeinen zwischen 0 und 120 °C und wird etwa 2 bis 40 Stunden eingehalten.

Die erfindungsgemäßen Polymeren enthalten im allgemeinen 1 bis 60, vorzugsweise 2 bis 40 mol-% an Einheiten mit olefinisch ungesättigten, polymerisierbaren bzw. vernetzbaren Doppelbindungen, 0 bis 85, vorzugsweise 0 bis 70 mol-%, an Vinylacetaleinheiten, 0 bis 45, vorzugsweise 1 bis 25 mol-%, an Vinylestereinheiten von gesättigten aliphatischen oder aromatischen Carbonsäuren und 5 bis 97, vorzugsweise 10 bis 90 mol-%, an Vinylalkoholeinheiten. Die Angaben in mol-% beziehen sich auf den Gehalt des Polymeren an aufgepfropften Einheiten.

Die Acetalgruppen können vor oder nach der Einführung der Reste mit polymerisierbaren Doppelbindungen in das Polymere eingeführt werden.

Zur Acetalisierung werden aliphatische C₁- bis C₂₀-Aldehyde, die substituiert sein können, und aromatische Aldehyde, die ebenfalls substituiert sein können, eingesetzt. Bevorzugt werden aliphatische Aldehyde mit 1-5 C-Atomen, z. B. n-Butyraldehyd, Isobutyraldehyd, Propionaldehyd oder Formaldehyd. Ggf. substituierte Benzaldehyde, z. B. Benzaldehyd, p-Chlorbenzaldehyd oder p-Methoxy-benzaldehyd, sind ebenfalls geeignet. Es können auch Kombinationen dieser Aldehyde untereinander verwendet werden. Die Hydroxylzahl des fertigen vernetzbaren Polymeren sollte im Bereich von 100 bis 600, vorzugsweise von 200 bis 500 liegen.

Die Acetalisierung kann nach zwei Verfahren erfolgen. Bei der ersten Ausführungsform wird das Pfropfpolymere in einem Alkohol oder Wasser-Alkohol-Gemisch gelöst oder dispergiert, mit einer katalytischen Menge einer anorganischen oder organischen Säure und einem Aldehyd oder Aldehydgemisch versetzt und erwärmt. Das Polymere kann durch Eintropfen in einen Nichtlöser ausgefällt und gereinigt werden.

Bei der zweiten Ausführungsform wird das Pfropfpolymere in Wasser gelöst und mit einem Aldehyd oder Aldehydgemisch versetzt. Dann wird bei niedriger Temperatur eine wäßrige Lösung einer anorganischen oder starken organischen Säure zugetropft. Dabei fällt das acetalisierte Pfropfpolymere häufig aus. Die Reaktion wird bei erhöhter Temperatur (etwa 20 - 60°C) vervollständigt. Das isolierte Polymere wird durch Waschen mit Wasser oder durch Umfällen gereinigt.

Die Acetalisierung kann auch in organischen Lösemitteln durchgeführt werden. Als Lösemittel eignen sich mit Wasser mischbare Lösemittel, insbesondere wasserlösliche Alkohole, z. B. Ethanol und/oder Methanol, ggf. unter Zusatz von Wasser.

Als Säurekatalysatoren werden vorzugsweise organische Sulfonsäuren, z. B. Toluolsulfonsäuren, ferner Mineralsäuren, z. B. Schwefelsäure, Phosphorsäure, Salzsäure oder gegebenenfalls Salpetersäure, verwendet. Phosphorsäure oder Salzsäure werden bevorzugt.

Die Umsetzung der Pfropfpolyvinylalkohole zu Pfropfpolyvinylacetalen ist in den älteren deutschen Patentanmeldungen P 38 35 840.9 und P 39 20 229.1 beschrieben.

Zusätzlich können noch andere gesättigte Seitenketten in das Polymere eingeführt werden. Solche Reste ohne olefinische Unsättigung lassen sich problemlos durch Veretherung oder Umesterung einführen. Beispielsweise ist es möglich, durch Acylierung der Vinylalkoholeinheiten mit aktivierten Derivaten von zwei- oder mehrbasigen Garbonsäuren, wie Bernsteinsäureanhydrid oder Phthalsäureanhydridr unter Bildung der Partialester dieser mehrbasigen Säuren Polymere mit Seitenketten herzustellen, die freie Carboxylgruppen enthalten. Die Einführung von Alkalilöslichkeit vermittelnden Gruppen kann auch durch Umsetzung von OH-Gruppen des Polymeren mit Sulfonylisocyanaten nach bekannten Methoden erfolgen. Derartige Umsetzungen können gleichzeitig mit oder auch getrennt von der Einführung der olefinisch ungesättigten Gruppen durchgeführt werden.

Die erfindungsgemäßen Polymeren ergeben in Kombination mit Photoinitiatoren und gegebenenfalls zusätzlichen negativ arbeitenden Substanzen lichtempfindliche Gemische, die für zahlreiche Anwendungsmöglichkeiten einsetzbar sind, insbesondere für die Herstellung von Flachdruckplatten, Siebdruckschablonen und Photoresists.

Die lichtempfindlichen Gemische enthalten im allgemeinen 20 bis 95, bevorzugt 25 bis 80 Gew.-% vernetzbares polymeres Bindemittel, bezogen auf das Gewicht aller nichtflüchtigen Bestandteile des Gemischs. Bis zu 80, vorzugsweise bis zu 40 Gew.-%, der Gesamtmenge an Bindemittel können durch eine Vielzahl herkömmlicher gesättigter Bindemittel ersetzt werden. Als Beispiele seien genannt:
Polyamide, Polyvinylester, Polyvinylacetale, Polyvinylether, Epoxidharze, Polyacrylsäureester, Polymethacrylsäureester, Polyester, Alkydharze, Polyacrylamide, Polyvinylalkohole, Polyethylenoxide, Polydimethylacrylamid, Polyvinylpyrrolidon, Polyvinylmethylformamid, Polyvinylmethylacetamid sowie Mischpolymerisate der Monomeren, die die aufgezählten Homopolymerisate bilden.

Mit Vorteil sollten auch diese Bindemittel wasserunlöslich, aber in wäßrig-alkalischen Lösungen löslich oder mindestens quellbar sein. Beispiele für derartige Polymere sind: Maleinatharze, Polymerisate aus N-(p-Tolylsulfonyl)-carbaminsäure-β-(methacryloyloxy)-ethylester und Mischpolymerisate dieser und ähnlicher Monomerer mit anderen Monomeren sowie Vinylacetat/Crotonsäure-und Styrol/Maleinsäureanhydrid-Mischpolymerisate, Alkylmethacrylat/Methacrylsäure-Mischpolymerisate und Mischpolymerisate aus Methacrylsäure, höheren Alkylmethacrylaten und Methylmethacrylat und/oder Styrol, Acrylnitril u.a.

Die erfindungsgemäßen Gemische enthalten außer den erfindungsgemäßen Polymeren mindestens eine lichtempfindliche Substanz, die im einfachsten Fall ein Photoinitiator oder eine Photoinitiatorkombination ist, durch die die Polymerisation oder Vernetzung der ungesättigten Gruppen bei Einwirkung von aktinischem Licht angeregt wird.

Als Photoinitiatoren können zahlreiche Substanzen Verwendung finden. Beispiele sind Benzoine, Benzoinether, Mehrkernchinone, wie 2-Ethylanthrachinon, Acridinderivate, wie 9-Phenylacridin oder Benzacridine, Phenazinderivate, wie 9,10-Dimethylbenz(a)phenazin, Chinoxalin- oder Chinolinderivate, wie 2,3-Bis-(4-methoxyphenyl)chinoxalin oder 2-Styrylchinolin, Chinazolinverbindungen oder Acylphosphinoxidverbindungen. Photoinitiatoren dieser Art sind in den DE-C 20 27 467, 20 39 861, der DE-A 37 28 168, der EP-B 11 786 und der EP-A 220 589 beschrieben. Außerdem können z. B. Hydrazone, Mercaptoverbindungen, Pyrylium- oder Thiopyryliumsalze, Xanthone, Thioxanthone, Benzochinone, Acetophenone, Benzophenone, synergistische Mischungen mit Ketonen oder Hydroxyketonen und Farbstoff-Redoxsysteme eingesetzt werden. Besonders bevorzugt werden Photoinitiatoren, die durch Licht spaltbare Trihalogenmethylgruppen aufweisen, wobei insbesondere entsprechende Verbindungen aus der Triazin- oder Thiazolinreihe erwähnt sein sollen. Solche Verbindungen sind in den DE-A 27 18 259, 33 33 450 und 33 37 024 beschrieben. Ein bevorzugtes Beispiel ist 2-(4-methoxystyryl)-4,6-bis-trichlormethyl-s-triazin. Diese Verbindungen können mit Vorteil mit photooxydierbaren Farbstoffen, photoreduzierbaren Verbindungen und ggf. weiteren Coinitiatoren kombiniert werden, wie es z. B. in den EP-A 284 939 und 287 817 beschrieben ist.

Die Photoinitiatoren werden im allgemeinen in Mengenanteilen von 0,01 bis 15, vorzugsweise von 0,1 bis 10 Gew.-%, bezogen auf die nichtflüchtigen Bestandteile des Gemischs, zugesetzt.

Die erfindungsgemäßen Gemische enthalten vorzugsweise zusätzlich eine radikalisch polymerisierbare, bevorzugt niedermolekulare Verbindung mit mindestens einer endständigen ethylenischen Doppelbindung. Als polymerisierbare Verbindungen werden bevorzugt Ester der Acryl- oder Methacrylsäure mit ein- oder mehrwertigen, vorzugsweise primären Alkoholen verwendet. Vorzugsweise sollten die polymerisierbaren Verbindungen mehr als eine, insbesondere 2 bis 4, polymerisierbare Gruppen enthalten. Beispiele für geeignete mehrwertige Alkohole sind Ethylenglykol, Propylenglykol, Butandiol-1,4, Butandiol-1,3, Diethylenglykol, Triethylenglykol oder Polyethylen- oder Polypropylenglykole mit Molekulargewichten von etwa 200 bis 1.000, Neopentylglykol, Glycerin, Trimethylolethan und -propan, Pentaerythrit, Bisphenol-A-Derivate sowie Umsetzungsprodukte dieser Verbindungen mit Ethylenoxid und/oder Propylenoxid. Besonders geeignet sind Urethangruppen enthaltende Bisacrylate und Bismethacrylate, die durch Umsetzung von 1 mol eines Diisocyanats mit 2 mol Hydroxyalkylacrylat oder -methacrylat erhalten werden. Das Diisocyanat kann auch ein oligomeres, durch Umsetzen eines Diols mit einem molaren Überschuß an monomerem Diisocyanat erhaltenes Produkt sein. Derartige und ähnliche Urethangruppen enthaltende Monomere sind in den DE-A 20 64 079, 28 22 190, 30 48 502 und 35 40 480 beschrieben. Zusätzlich zu den genannten Estern können auch Amide von Acryl- oder Methacrylsäure eingesetzt werden. Beispiele sind Methylenbis-(meth)acrylamid, Ethylenbis-(meth)acrylamid und m-Xylylenbis-(meth)acrylamid.

Der Mengenanteil des Gemischs an Monomeren beträgt im allgemeinen etwa 10 bis 80, vorzugsweise 20 bis 60 Gew.-% der nichtflüchtigen Bestandteile.

Als lichtempfindliche Verbindungen können die Gemische anstelle der Photoinitiatoren oder zusätzlich zu diesen lichthärtbare Diazo- oder Azidoverbindungen enthalten. Vorzugsweise werden Diazoniumsalz-Polykondensationsprodukte eingesetzt, die durch Kondensation von aromatischen Diazoniumsalzen mit aktiven Carbonylverbindungen, besonders Formaldehyd, erhalten werden.

Mit besonderem Vorteil werden Mischkondensationsprodukte verwendet, die außer den Diazoniumsalzeinheiten A-N₂X noch andere, nicht lichtempfindliche Einheiten B enthalten, die von kondensationsfähigen Verbindungen, insbesondere aromatischen Aminen, Phenolen, Phenolethern, aromatischen Thioethern, aromatischen Kohlenwasserstoffen, aromatischen Heterocyclen und organischen Säureamiden, abgeleitet sind. Diese Kondensationsprodukte sind in der DE-A 20 24 244 beschrieben. Allgemein sind alle Diazoniumsalz-Polykondensationsprodukte geeignet, die in der DE-A 27 39 774 beschrieben sind.

Die Diazoniumsalzeinheiten A-N₂X leiten sich bevorzugt von Verbindungen der Formel (R¹-R²-)ₚR³-N₂X ab, wobei
- X: das Anion der Diazoniumverbindung,
- p: eine ganze Zahl von 1 bis 3,
- R¹: einen aromatischen Rest mit mindestens einer zur Kondensation mit aktiver Carbonylverbindung befähigten Position,
- R³: eine Arylengruppe, vorzugsweise eine ggf. substituierte Phenylengruppe,
- R²: eine Einfachbindung oder eine der Gruppen:
- (CH₂)_{q}-NR⁴-,
- O-(CH₂)ᵣ-NR⁴-,
- S-(CH₂)ᵣ-NR⁴-,
- S-CH₂CO-NR⁴-,
- O-R⁵-O-,
- O -
- S - oder
- CO-NR⁴-
bedeuten, worin
- q: eine Zahl von 0 bis 5,
- r: eine Zahl von 2 bis 5,
- R⁴: Wasserstoff, eine Alkylgruppe mit 1 bis 5 C-Atomen, eine Aralkylgruppe mit 7 bis 12 C-Atomen oder eine Arylgruppe mit 6 bis 12 C-Atomen, und
- R⁵: eine Arylengruppe mit 6 bis 12 C-Atomen ist.

Weitere vorteilhafte Polykondensationsprodukte werden erhalten, indem ein ggf. substituiertes Diphenylamindiazoniumsalz zuerst mit einer aromatischen Verbindung R′-O-CH₂-B und danach mit einer aromatischen Verbindung R′-O-CH₂-B-CH₂-O-R′ kondensiert wird, wobei R′ ein Wasserstoffatom, ein Alkyl- oder aliphatischer Acylrest und B der Rest einer der vorstehend aufgezählten kondensationsfähigen Verbindungen ist. Diese Kondensationsprodukte sind in der EP-A 126 875 beschrieben.

Der Mengenanteil an Diazoniumsalz-Polykondensationsprodukten beträgt 0 bis 60, vorzugsweise 10 bis 40 Gew.-%, bezogen auf die nichtflüchtigen Bestandteile des Gemischs.

Der Zusatz von Diazoniumsalz-Polykondensationsprodukten allein zu den erfindungsgemäßen Polymeren ergibt keine bevorzugten Gemische. Dagegen werden Gemische, die zusätzlich Photoinitiatoren der oben beschriebenen Art enthalten, mit Vorteil eingesetzt. Solche Gemische können vorzugsweise auch noch niedermolekulare polymerisierbare Verbindungen der vorstehend beschriebenen Art enthalten.

Die lichtempfindlichen Gemische können je nach geplanter Anwendung und je nach den gewünschten Eigenschaften weitere Stoffe als Zusätze enthalten. Beispiele sind: Inhibitoren zur Verhinderung der thermischen Polymerisation der Monomeren, Wasserstoffdonatoren, Farbstoffe, gefärbte und ungefärbte Pigmente, Farbbildner, Indikatoren, Weichmacher, Kettenüberträger, Verlaufmittel, Mattierungs- oder Gleitmittel und Säuren zur Stabilisierung der Diazoniumsalz-Polykondensate, bevorzugt Phosphorsäure.

Beispiele für Farbstoffe und/oder Pigmente sind Triphenylmethanfarbstoffe, z. B. Brilliant Green Dye (C.I. 42 040), Viktoriareinblau FGA, Viktoriareinblau BO (C.I. 42 595), Malachitgrün, Kristallviolett, Viktoriablau B (C.I. 44 045), Rodamin 6 (C.I. 45 160), Naphthalimidfarbstoffe, Azosole und 3′-Phenyl-7-dimethylamino-2,2′-spirodi(2H-1-benzopyran). Photochrome Systeme, die bei Belichtung mit aktinischem Licht ihre Farbe reversibel oder irreversibel ändern, ohne hierbei den Photopolymerisationsprozeß zu stören, sind z. B. Leukofarbstoffe zusammen mit geeigneten Aktivatoren. Beispiele für Leukofarbstoffe sind die Leukobasen der Triphenylmethanfarbstoffe, wie Kristallviolett, Malachitgrün, Leuko-Basischblau, Leuko-Pararosanilin, Leuko-Patentblau A und V genannt; ferner kommt auch Rhodamin B-Base in Betracht. Als Aktivatoren für diese photochromen Verbindungen kommen u.a. organische Halogenverbindungen, die bei Bestrahlung mit aktinischem Licht Halogenradikale abspalten, oder Hexaarylbisimidazole in Betracht. Als sensitometrische Regler können Verbindungen wie 9-Nitroanthracen, 10,10′-Bisanthron, Phenazinium-, Phenoxazinium-, Acridinium- oder Phenothiazinium-Farbstoffe, insbesondere in Kombination mit milden Reduktionsmitteln, zugesetzt werden.

Die Zusatz- und/oder Hilfsstoffe sind in den lichtempfindlichen Gemischen in den für diese Zusatzstoffe üblichen und bekannten wirksamen Mengen vorhanden. Ihre Menge sollte jedoch im allgemeinen 30 Gew.-%, vorzugsweise 20 Gew.-%, bezogen auf die photopolymerisierbare Aufzeichnungsschicht, nicht überschreiten.

Die Beschichtung des Trägermaterials erfolgt aus entsprechenden organischen Lösemitteln oder Lösemittelgemischen, und zwar im allgemeinen durch Gießen, Sprühen oder Eintauchen. Die Art des Auftrags hängt von der gewünschten Schichtdicke ab, wobei die Schichtdicken der trockenen Schicht im allgemeinen zwischen 0,5 und 200 µm liegen.

Als Schichtträger eignen sich z. B. Magnesium, Zink, Kupfer, Aluminium, Stahl, aber auch Polyester- oder Celluloseacetatfolie, Perlongaze etc., deren Oberfläche bei Bedarf einer Vorbehandlung unterworfen sein kann. Das Trägermaterial kann dabei als endgültiger Schichtträger fungieren oder als temporäres Trägermaterial, von dem die lichtempfindliche Schicht auf das zu bearbeitende Werkstück mittels Laminieren übertragen wird.

Das erfindungsgemäße Gemisch erfordert nicht unbedingt einen Sauerstoffausschluß bei der Belichtung. Es ist aber im allgemeinen günstig, die Gemische während der Lichtpolymerisation dem Einfluß des Luftsauerstoffs weitgehend zu entziehen. Im Fall der Anwendung des Gemischs in Form dünner Kopierschichten ist es empfehlenswert, einen geeigneten, für Sauerstoff wenig durchlässigen Deckfilm aufzubringen. Dieser kann selbsttragend sein und vor der Entwicklung der Kopierschicht abgezogen werden. Für diesen Zweck sind z. B. Polyesterfilme geeignet. Der Deckfilm kann auch aus einem Material bestehen, das sich in der Entwicklerflüssigkeit löst oder mindestens an den nicht gehärteten Stellen bei der Entwicklung entfernen läßt. Hierfür geeignete Materialien sind z. B. Polyvinylalkohol, Vinylalkohol/Vinylacetat-Copolymere, Polyvinylpyrrolidon, Vinylpyrrolidon/Vinylacetat-Copolymer, Polyacrylsäure, Butadien/Maleinsäure-Copolymer, Polyvinylmethylether, Polyphosphate, Zucker usw.. Solche Deckschichten haben im allgemeinen eine Dicke von 0,1 bis 10, vorzugsweise von 0,5 bis 5 µm.

Das mit den lichtempfindlichen Gemischen hergestellte Aufzeichnungsmaterial dient einerseits zur Herstellung von Bildern auf geeigneten Trägern bzw. Empfangsblättern, andererseits zur Herstellung von Reliefs, die als Druckformen, Siebe, Reservagen und dgl. Anwendung finden.

Darüber hinaus ist es aber auch möglich, die lichtempfindlichen Gemische zur Herstellung von durch UV-Strahlung härtbaren Lacken zu verwenden, die als Oberflächenschutz eingesetzt werden können, oder zur Formulierung von UV-härtbaren Druckfarben.

Bevorzugt wird das Gemisch zur Herstellung von Flachdruckformen verwendet, wobei als Trägermaterial Aluminium bevorzugt wird. Besonders bevorzugt wird Aluminium, das für diesen Zweck in üblicher Weise vorbehandelt wird, z. B. durch mechanisches, chemisches oder elektrochemisches Aufrauhen und ggf. anschließende anodische Oxydation. Eine weitere Behandlung dieses Trägermaterials, z. B. mit Polyvinylphosphonsäure, Alkalisilikat, Phosphat, Hexafluorozirkonat, Chromat, Borat, Polyacrylamid und Cellulosederivaten, ist vorteilhaft.

Die Verarbeitung der aus den Gemischen erhaltenen Aufzeichnungsmaterialien erfolgt in bekannter Weise durch bildmäßiges Belichten, und Auswaschen der unbelichteten Schichtbereiche mit einem geeigneten Entwickler.

Die Belichtung des Aufzeichnungsmaterials erfolgt in bekannter Weise unter einer Vorlage mit Kopierlichtquellen, die einen möglichst hohen Spektralanteil im nahen Ultraviolettbereich emittieren. Sie kann auch durch Laserbestrahlung erfolgen. Geeignet für die Bestrahlung sind leistungsgerechte kürzerwellige Laser, beispielsweise Ar-Laser, Krypton-Ionen-Laser, Helium/Cadmium-Laser, die etwa zwischen 300 und 600 nm emittieren, aber für einige Schichten auch CO₂-Laser, welche bei 10,6 µm emittieren, oder YAG-Laser, die bei 1,06 µm emittieren.

Als Entwicklerlösungen werden neutrale oder bevorzugt alkalische wäßrige Lösungen mit einem pH-Wert im Bereich von 8 bis 14, vorzugsweise 8,5 bis 13, verwendet, die Puffersalze, z. B. wasserlösliche Alkaliphosphate, -silikate, -borate, -carbonate, -acetate oder -benzoate, enthalten. Als weitere Bestandteile werden Netzmittel, vorzugsweise anionische Netzmittel, und ggf. wasserlösliche Polymere verwendet. Die Lösung kann auch geringe Mengen, z. B. bis zu 5, bevorzugt nicht mehr als 2 Gew.-% an mit Wasser mischbaren organischen Lösemitteln enthalten. Bevorzugt werden schwerflüchtige Lösemittel, z. B. araliphatische Alkohole, deren Dampfdruck bei der Handhabung des Entwicklers nicht ins Gewicht fällt. Die Entwicklung kann in bekannter Weise durch Tauchen, Besprühen, Bürsten oder Tamponieren erfolgen. Anschließend kann das entwickelte Material mit einem Konservierungsmittel behandelt werden.

Zur Steigerung der Druckauflage kann nach der Belichtung eine Nacherwärmung erfolgen oder die entwickelte Druckplatte nachbelichtet werden. Beide Schritte können auch kombiniert angewendet werden. Ohne Nacherwärmung oder -belichtung werden bereits gute Druckauflagen erreicht.

Auch eine lichtempfindliche Schicht mit Diazoniumsalz-Polykondensationsprodukten kann durch eine thermische Nachbehandlung zusätzlich verfestigt werden, was insbesondere bei der Anwendung als Flachdruckform sinnvoll ist. Zu diesem Zweck wird die konservierte Druckform auf Temperaturen zwischen 180 und 240 °C erwärmt. Die Dauer dieser Behandlung ist abhängig von der Temperatur und schwankt zwischen 2 und 20 Minuten. Diese thermische Nachbehandlung erfordert keinen Zusatz eines Vernetzungsmittels. Es wird angenommen, daß die Polymeren mit ungesättigten Seitengruppen eine zusätzliche thermische Vernetzung erfahren. Es kann, daher sinnvoll sein, dem lichtempfindlichen Gemisch einen thermischen Vernetzer zuzufügen, z. B. ein organisches Peroxid mit einer Scorch-Temperatur von mindestens 100 °C, das oberhalb dieser Temperatur befähigt ist, Radikale zu bilden, wie es in der EP-A 247 461 beschrieben ist. Geeignete Peroxide sind Peroxyester, Peroxyketale, Bisaralkylperoxide, Dialkylperoxide und Bis-dialkylperoxide. Durch diese thermische Nachbehandlung wird das Farbannahmeverhalten der lichtempfindlichen Schicht erheblich verbessert, insbesondere dann, wenn solche Polymeren eingesetzt werden, die eine hohe Hydroxylzahl aufweisen.

Die erfindungsgemäßen Gemische und die daraus erhaltenen Aufzeichnungsmaterialien sind nach der Belichtung genügend hydrophob, um eine gute Farbannahme zu gewährleisten. Die belichteten Bereiche quellen beim Entwicklungsvorgang praktisch nicht. Die erfindungsgemäßen Polymeren zeichnen sich gegenüber bekannten lichtvernetzbaren Polymeren auf Polyvinylalkoholbasis durch eine geringere Sprödigkeit aus. Besonders diejenigen Vertreter, deren Polyurethan-Pfropfgrundlage Ethergruppen enthält, also unter Mitverwendung von Polyetherdiolen erhalten worden ist, zeigen diese Eigenschaft sehr deutlich. Auch wird dadurch die Löslichkeit in wäßrigen Entwicklerlösungen verbessert. Die Elastizität der erfindungsgemäßen Pfropfpolymeren wird auch durch die Urethangruppen in der Pfropfgrundlage verbessert.

Durch die polymerisierbaren Doppelbindungen im Polymeren erhält die lichtempfindliche Schicht nach der Belichtung eine zusätzliche Härtung; die erhöhte Festigkeit der belichteten Polymerschicht führt wiederum zu einer Steigerung der Druckauflage. Ferner wird durch die zusätzliche Vernetzung die Lichtempfindlichkeit erhöht.

Die bei bekannten auf Polyvinylalkoholen basierenden lichtvernetzbaren Polymeren beobachtete Sprödigkeit wird einerseits durch einen höheren Modifizierungsgrad des Polyvinylalkoholpfropfpolymerisats und andererseits durch die erwähnten strukturellen Besonderheiten dieser Pfropfpolymerisate beseitigt. So sind die Schmelzpunkte der auf Polyurethane aufgepropften Polyvinylalkoholderivate gegenüber herkömmlichen Polyvinylalkoholen deutlich abgesenkt, wodurch auch die Sprödigkeit der Polymeren erheblich geringer wird. Die Schmelzpunkte der Polymerisate können sowohl durch die Zusammensetzung der Polyurethanpfropfgrundlage als auch durch den Verseifungsgrad und die Derivatisierung der entstandenen OH-Gruppen sehr breit variiert werden.

Die erfindungsgemäßen lichtempfindlichen Aufzeichnungsmaterialien ergeben Druckplatten, die sich durch hervorragende Wiedergabeeigenschaften auszeichnen und leicht und schleierfrei mit umweltneutralen Entwicklerlösungen verarbeitbar sind. Die intermolekulare Vernetzung des Bindemittels beim Belichten bewirkt eine extrem hohe Molekulargewichtszunahme. Dadurch erhält die lichtempfindliche Schicht zusätzliche Härte, was sich bei hohen Druckauflagen auswirkt. Auch die Lichtempfindlichkeit der erfindungsgemäßen Gemische ist stark verbessert, vor allem Druckplatten ohne Sauerstoffsperrschicht zeichnen sich gegenüber vergleichbaren bekannten Druckplatten durch kürzere Belichtungszeiten aus.

Die nachstehenden Beispiele sollen die Erfindung und ihre Anwendungsmöglichkeiten näher erläutern. Gewichtsteile (Gt) und Volumenteile (Vt) stehen im Verhältnis von g/cm³; Prozentzahlen und Mengenverhältnisse sind, wenn nicht anders angegeben, in Gewichtsteilen zu verstehen.

Im folgenden wird zunächst die Herstellung der in den Beispielen eingesetzten Pfropfpolymeren beschrieben.
a) Herstellung von Polyurethan-Pfropfgrundlagen
In einem Reaktionsgefäß mit Rührwerk wurden unter Stickstoffatmosphäre jeweils die Diolkomponente und der Katalysator vorgelegt, und das Gemisch wurde auf eine Reaktionstemperatur zwischen 65 und 100 °C erwärmt. Die Diisocyanatkomponente wurde anschliessend so zudosiert, daß die Temperatur des Reaktionsgemischs 120 °C, vorzugsweise 100 °C, nicht überschritt. Nach vollständiger Zudosierung der Diisocyanatkomponente wurde zur Vervollständigung der Reaktion bis zu zwei Stunden auf 80 bis 100 °C nacherwärmt. Die Vollständigkeit des Umsatzes und damit das Ende der Reaktion wurden durch Analyse des Diisocyanatverbrauchs nach üblichen Methoden (z. B. IR-Spektroskopie, Titration) ermittelt.
Einzelheiten über die Zusammensetzung der Reaktionsgemische der Beispiele sowie das berechnete mittlere Molekulargewicht (M_{ber}) der resultierenden Polyurethane (PU) können der Tabelle 1 entnommen werden. Die Molekulargewichte ergeben sich aus dem Molverhältnis Diolkomponente/Diisocyanat unter der Annahme einer vollständigen Umsetzung der NCO-Gruppen.

**Tabelle 1**

| Polyurethan (PU) | Diolkomponente PEG/Bu Molverhältnis) | Reaktionstemp. °C | Molverhältnis Diolkomponente/Diisocyanat | M_{ber} |
|---|---|---|---|---|
| A | 7 : 3 | 80 | 1 : 0,9 | 6470 |
| B | 7 : 3 | 72 | 1 : 0,9 | 6470 |
| C | 3 : 2 | 78 | 1 : 0,97 | 18300 |
| D | 7 : 3 | 75 | 1 : 0,97 | 19900 |

Alle Produkte wurden mit Isophorondiisocyanat als Diisocyanatkomponente hergestellt. Als Katalysator wurde bei allen Produkten 1,4-Dimethylpiperazin in einer Menge von 0,48 mol-%, bezogen auf Diisocyanat, eingesetzt.
PEG = Polyethylenglykol, Molgewicht 600
Bu = 1,4-Butandiol
b) Herstellung der Pfropfpolymeren
Die Polyurethan-Pfropfgrundlage wurde jeweils in einem Reaktionsgefäß unter Stickstoffatmosphäre aufgeschmolzen bzw. unter Zusatz geringer Mengen Methanol gelöst und auf eine Temperatur von etwa 60 bis 100 °C erwärmt. Die zu pfropfenden Monomeren wurden, ggf. gelöst in einem Lösemittel (z. B. Methanol), einschließlich des in den Monomeren gelösten radikalischen Initiators so langsam zu der Polyurethan-Pfropfgrundlage dosiert, daß die Bildung von Homopolymerisat weitgehend unterblieb. Die Temperatur des Reaktionsgemischs sollte 120 °C, besser noch 100 °C nicht überschreiten. Nach Beendigung der Nachreaktion wurde überschüssiges Restmonomeres durch azeotrope Destillation mit Methanol entfernt. Die Zusammensetzung der einzelnen Reaktionsgemische sowie die Reaktionsparameter sind in Tabelle 2 angegeben.

**Tabelle 2**

| Pfropfpolymeres | PU | VAc g/g PU | Start Temp. °C | Zudos-Zeit Min. | Nachreakt. Min. | Gepfr. Monom. Gew.-% | Jₒ ml/g | Berechnetes Mol-Gew. |
|---|---|---|---|---|---|---|---|---|
| AV | A | 4 | 75 | 420 | 45 | 79,8 | 21,9 | 31300 |
| BV | B | 2,32 | 73 | 420 | 45 | 69,3 | 18,3 | 21000 |
| CV | C | 3,16 | 75 | 300 | 45 | 74,7 | 26,3 | 72500 |
| DV | D | 3,16 | 75 | 420 | 45 | 74,5 | 28,7 | 78000 |
| VAc = Vinylacetat Jₒ = Grenzviskositätszahl (intrinsic viscosity) | | | | | | | | |

Alle Produkte wurden unter Verwendung von 0,2 mol-% Dibenzoylperoxid (bezogen auf das eingesetzte Monomere) hergestellt. Die Grenzviskositätszahlen wurden im Ostwaldviskosimeter in Tetrahydrofuran bei 25 °C ermittelt, die vermessenen Konzentrationen wurden so gewählt, daß eine Hagenbachkorrektur nicht durchgeführt werden mußte. Die gepfropfte Monomermenge in Gew.-% bezieht sich auf das Gewicht des Gesamtpolymeren.
c) Verseifung der Pfropfpolymeren
Die Pfropfpolymerisate aus Tabelle 2 wurden innerhalb zwei Stunden bei Raumtemperatur umgeestert bzw. verseift. Hierzu wurden die Produkte zu 50%iger Lösung in Methanol gelöst und mit methanolischer Natronlauge (10 %ig) versetzt. Es wurden je nach Alkalimenge und dem Pfropfungsgrad des Pfropfpolymerisats polymere Hydrolyseprodukte mit unterschiedlichem Hydrolysegrad erhalten. Die Teilverseifung wurde unter Zusatz von Wasser durchgeführt. Die erhaltenen Gele wurden granuliert, das Granulat mit Methanol gewaschen (ggf. unter Zusatz von Essigsäure zur Neutralisation der Natronlauge) und getrocknet. Die Verfahrensbedingungen und Ergebnisse sind in Tabelle 3 aufgeführt.

**Tabelle 3**

| Pfropfpolyvinylalkohol | Pfropfpolyvinylacetat | mol-% NaOH je Estereinheit | mol-% H₂O je Estereinheit | Hydrolyse grad in % | M_{ber} |
|---|---|---|---|---|---|
| E | AV | 1,92 | 0 | 98,2 | 22 000 |
| F | BV | 5,0 | 0 | 98,9 | 14 000 |
| G | CV | 1,92 | 0 | 98 | 47 000 |
| H | DV | 1,97 | 0 | 98,4 | 44 000 |
| I | CV | 1,93 | 42,9 | 86,8 | 50 000 |

Im folgenden wird im einzelnen die Herstellung von erfindungsgemäßen ungesättigten Polymeren aus den Pfropfpolyvinylalkoholen E bis I beschrieben. Die Polymeren und ihre allgemeinen Herstellungsdaten sind in der nachfolgenden Tabelle 4 zusammengestellt.

**Tabelle 4**

| ungesättigtes Polymeres | OH-Gruppen enthaltendes Polymeres | Aldehyd | (Meth)acrylsäurederivat | % C = C |
|---|---|---|---|---|
| K | H | Bu | Methacryloylchlorid | 4,6 |
| L | G | Bu | Methacrylsäureanhydrid | 2,1 |
| M | E | Bu | Glycidylmethacrylat | 2,4 |
| N | F | Pr | Isocyanatoethylmethacrylat | 3,7 |
| O | I | - | Methacrylsäureanhydrid | 3,9 |
| P | G | - | Isocyanatoethylmethacrylat | 4,6 |
| Q | G | i-Bu | N-Methylolmethacrylamid | 1,6 |
| R | H | Bu | Methacryloylchlorid | 3,4 |
| S | H | - | Hydroxyethylmethacrylat | 4,8 |
| T | E | Bu | Methacrylsäureanhydrid | 1,8 X* |
| U | E | Bu | Glycidylmethacrylat | 1,7 X* |
| V | E | Bu | Methacrylsäureanhydrid | 1,8 X** |
| W | G | Bu | Acryloylchlorid | 3,2 |
| X | H | Pr | Acrylsäureanhydrid | 2,2 |

| | | | | |
|---|---|---|---|---|
| X* zusätzlich mit Phthalsäureanhydrid umgesetzt | | | | |
| X** zusätzlich mit Propenylsulfonylisocyanat umgesetzt | | | | |

### Polymeres K

10 Gt des Polymeren H wurden in 80 Gt N-Methylpyrrolidon unter Erwärmen gelöst. Die Lösung wurde bei 30 °C mit 0,02 Gt Hydrochinonmonomethylether, 0,02 Gt p-Dimethylaminopyridin und 2,4 Gt Triethylamin versetzt. Hierzu wurden 4,2 Gt Methacrylsäurechlorid getropft. Die Mischung wurde 8 Stunden bei 50 °C und 24 Stunden bei Raumtemperatur gerührt, dann bei Raumtemperatur mit konzentrierter Salzsäure auf einen pH-Wert von 2 bis 3 eingestellt, mit 3,6 Gt n-Butyraldehyd versetzt und anschließend 7 Stunden bei 40 °C gerührt. Das Polymere wurde durch Eintropfen in 5.000 Gt dest. Wasser gefällt, abgesaugt und getrocknet. Das Polymere enthielt 4,6 Gew.-% C=C-Gruppen (Gewicht einer C=C-Gruppe = 24).

### Polymeres L

50 Gt des Polymeren G wurden fein zerrieben und in 150 ml Aceton aufgeschlämmt. Zu dieser Mischung wurden 12,5 Gt Methacrylsäureanhydrid, 0,1 Gt 2,6-Di-tert.-butyl-4-methylphenol und 0,1 Gt Triethylamin gegeben. Die Aufschlämmung wurde 12 Stunden unter Rückfluß gekocht. Nach dem Abkühlen auf Raumtemperatur wurde das Polymere abgesaugt, mehrmals mit Aceton ausgewaschen und getrocknet. Zur Acetalisierung wurden 10 Gt des Polymeren in 70 Gt N-Methylpyrrolidon gelöst, mit 0,04 Gt 2,6-Di-tert.-butyl-4-methylphenol und 3,46 Gt n-Butyraldehyd versetzt. Zu dieser Lösung wurden 0,85 Gt konz. Salzsäure gegeben und das Gemisch auf 40 °C erwärmt. Nach 2 Stunden wurden weitere 2,1 Gt konz. Salzsäure zugegeben und die Lösung nochmals 2 Stunden bei 40 °C gerührt. Nach dem Abkühlen auf Raumtemperatur wurde das Polymere durch Eingießen in 5.000 Gt dest. Wasser gefällt, abgesaugt und getrocknet. Das Polymere enthielt 2,1 Gew.-% C=C-Gruppen.

### Polymeres M

20 Gt des Polymeren E wurden in 160 Gt dest. Wasser unter leichter Wärmezufuhr gelöst. Bei Raumtemperatur wurden 5,8 Gt n-Butyraldehyd und 0,08 Gt 2,6-Di-tert.-butyl-4-methylphenol zugegeben. Zu dieser Mischung wurde unter gutem Rühren eine Lösung aus 0,16 Gt Natriumoctylsulfat, 2 Gt konz. Salzsäure und 24 Gt Wasser zugetropft. Nachdem das Gemisch eine Stunde bei Raumtemperatur gerührt worden war, wurde es auf 40 °C erwärmt und weitere 2 Stunden gerührt. Nach Zugabe von weiteren 5,7 Gt konz. Salzsäure wurde noch 2 Stunden bei 40 °C gerührt und nach dem Abkühlen auf Raumtemperatur die wäßrige Phase vom ausgefallenen Polymeren abdekantiert, das Polymere in Ethanol gelöst, in 10.000 Gt dest. Wasser gefällt und im Vakuumtrockenschrank bis zur Gewichtskonstanz getrocknet. 10 Gt des so hergestellten Polymeren wurden in 50 Gt N-Methylpyrrolidon gelöst und mit 2,2 Gt Glycidylmethacrylat, 5 Gt Aluminiumoxid basisch und 10 Tropfen Triethylamin versetzt. Diese Lösung wurde 48 Stunden bei Raumtemperatur gerührt. Nach dem Abfiltrieren des Aluminiumoxids wurde das Polymere in Wasser gefällt und getrocknet. Es enthielt 2,4 Gew.-% C=C-Gruppen.

### Polymeres N

Analog der Herstellung des Polymeren M wurden 20 Gt des Polymeren F mit 4,7 Gt Propionaldehyd acetalisiert. 10 Gt des so hergestellten Polymeren wurden fein zerrieben, in 100 Gt Butanon aufgeschlämmt und bei Raumtemperatur mit 3,9 Gt Isocyanoethylmethacrylat und 2 Tropfen Dibutylzinndilaurat versetzt. Die Aufschlämmung wurde 5 Stunden bei 60 °C und 24 Stunden bei Raumtemperatur gerührt. Das Polymere wurde abgesaugt und mehrmals mit Butanon ausgewaschen. Es enthielt 3,7 Gew.-% C=C-Gruppen.

### Polymeres O

10 Gt des Polymeren I wurden unter leichtem Erwärmen in 75 Gt N-Methylpyrrolidon gelöst. In diese Lösung wurden 0,2 Gt 2,6-Di-tert.-butyl-4-methylphenol, 0,05 Gt p-Dimethylaminopyridin, 3,25 Gt Methacrylsäureanhydrid und 0,1 Gt Triethylamin gegeben und das Gemisch 8 Stunden bei 50 °C gerührt. Nach dem Abkühlen auf Raumtemperatur wurde das Polymere in 5.000 Gt dest. Wasser gefällt, abgesaugt und getrocknet. Das Polymere enthielt 3,9 Gew.-% C=C-Gruppen.

### Polymeres P

20 Gt des Polymeren G wurden fein zerrieben und in 100 Gt Butanon aufgeschlämmt. Hierzu wurden 9,3 Gt Isocyanatoethylmethacrylat und 2 Tropfen Dibutylzinndilaurat gegeben und das Ganze 8 Stunden bei 50 °C gerührt. Nach dem Abkühlen auf Raumtemperatur wurde das Polymere abgesaugt und mehrmals mit Butanon ausgewaschen. Es enthielt 4,6 Gew.-% C=C-Gruppen.

### Polymeres Q

10 Gt des Polymeren G wurden in 80 Gt dest. Wasser gelöst. Bei Raumtemperatur wurden 1,7 Gt N-Methylolmethacrylamid und 0,1 Gt 2,6-Di-tert.-butyl-4-methylphenol zugegeben. Der pH-Wert der Lösung wurde mit Phosphorsäure (85%ig) auf 3 eingestellt. Die Lösung wurde 20 Stunden bei 60 °C erhitzt. Nach dem Abkühlen auf Raumtemperatur wurden 2,5 Gt Isobutyraldehyd und 0,08 Gt Natriumoctylsulfat zugegeben. Der Ansatz wurde 4 Stunden bei 40 °C gerührt. Das ausgefallene Polymere wurde nach dem Abdekantieren der wäßrigen Lösung in Ethanol gelöst und in 5.000 Gt dest. Wasser gefällt. Es enthielt 1,6 Gew.-% C=C-Gruppen.

### Polymeres R

20 Gt des Polymeren H wurden in 150 Gt N-Methylpyrrolidon in der Wärme gelöst. Bei Raumtemperatur wurden 0,4 Gt 2,6-Di-tert.-butyl-4-methylphenol und 0,1 Gt p-Dimethylaminopyridin zugegeben und 8,4 Gt Methacrylsäurechlorid zugetropft. Zu dieser Lösung wurden 4,9 Gt Triethylamin gegeben und das Gemisch 8 Stunden bei 50 °C und 24 Stunden bei Raumtemperatur gerührt. Nach dem Abkühlen auf Raumtemperatur wurde der Ansatz mit konz. Salzsäure auf einen pH-Wert von 2 bis 3 eingestellt, mit 7,2 Gt n-Butyraldehyd versetzt und 7 Stunden bei 60 °C gerührt. Das Polymere wurde in dest. Wasser gefällt, abgesaugt und getrocknet. Es enthielt 3,4 Gew.-% C=C-Gruppen.

### Polymeres S

10 Gt des Polymeren H wurden in 100 Gt Butanon aufgeschlämmt. Zu dieser Mischung wurden 0,04 Gt 2,6-Di-tert.-butyl-kresol, 0,4 Gt Phosphorsäure (85%ig) und 5,21 Gt Hydroxyethylmethacrylat gegeben und das Ganze insgesamt 20 Stunden bei 60 °C und 30 Stunden bei Raumtemperatur gerührt. Das Polymere wurde abgesaugt, mehrmals mit Butanon gewaschen und im Vakuumtrockenschrank getrocknet. Es enthielt 4,8 Gew.-% C=C-Gruppen.

### Polymeres T

Entsprechend der Herstellung des Polymeren M wurden 10 Gt des Polymeren E mit n-Butyraldehyd acetalisiert. Das Polymere wurde abgesaugt, getrocknet, in 75 Vt N-Methylpyrrolidon gelöst und mit 2,8 Gt Methacrylsäureanhydrid und 20 Gt Triethylamin versetzt. Die Lösung wurde 8 Stunden auf 60 °C erhitzt. Anschließend wurden bei Raumtemperatur 3,7 Gt Phthalsäureanhydrid und 0,5 Gt Triethylamin zugegeben und die Lösung 8 Stunden bei 80 °C gerührt. Das Polymere wurde in 5.000 Gt Wasser gefällt und im Trockenschrank getrocknet. Es enthielt 1,8 Gew.-% C=C-Gruppen und hatte die Säurezahl 75.

### Polymeres U

Wie bei der Herstellung des Polymeren M beschrieben, wurden 10 Gt des Polymeren E mit n-Butyraldehyd acetalisiert. Das ausgefallene Polymere wurde in Ethanol gelöst, in 5.000 Gt Wasser gefällt, abgesaugt und getrocknet. Anschließend wurde es in 75 Vt N-Methylpyrrolidon gelöst, mit 0,3 Gt Triethylamin und 6,95 Gt Phthalsäureanhydrid versetzt und 5 Stunden bei 80 °C gerührt. Nach dem Abkühlen auf Raumtemperatur wurde das Polymere in Wasser ausgefällt und getrocknet. Das Polymere wurde in 75 Gt Butanon gelöst, mit 0,2 Gt 2,6-Di-tert.-butyl-kresol, 0,05 Gt Dimethylaminopyridin und 1,0 Gt Triethylamin versetzt. Hierzu wurden 1,4 Gt Glycidylmethacrylat gegeben und 48 Stunden bei Raumtemperatur gerührt. Das Polymere wurde in 5.000 Gt Wasser gefällt und anschließend getrocknet. Es enthielt 1,7 Gew.-% C=C-Gruppen und hatte die Säurezahl 87.

### Polymeres V

Wie bei der Herstellung des Polymeren T beschrieben, wurde das Polymere E acetalisiert und mit Doppelbindungen versehen. Statt mit Phthalsäureanhydrid wurde jedoch mit Propenylsulfonylisocyanat umgesetzt. Hierbei wurden zur Lösung in N-Methylpyrrolidon 3,7 Gt des Sulfonylisocyanats in 15 Vt Butanon getropft. Dabei erwärmte sich die Mischung auf 34 °C. Als die gesamte Isocyanatlösung zugetropft war, wurden 3 Tropfen Dibutylzinndilaurat zugegeben und das Ganze eine Stunde bei Raumtemperatur gerührt. Das Polymere wurde in 5.000 Gt Wasser gefällt und getrocknet. Es enthielt 1,8 Gew.-% C=C-Gruppen und hatte die Säurezahl 102.

### Polymeres W

Wie bei der Herstellung des Polymeren R beschrieben, wurden ungesättigte Gruppen und Acetalgruppen in das Polymere G eingeführt. Statt Methacryloylchlorid wurde jedoch Acryloylchlorid (7,3 Gt) eingesetzt. Das Produkt enthielt 3,2 Gew.-% C=C-Gruppen.

### Polymeres X

Wie bei der Herstellung des Polymeren L beschrieben, wurde das Polymere H acyliert und acetalisiert. Statt des Methacrylsäureanhydrids wurden jedoch 10,1 Gt Acrylsäureanhydrid und statt n-Butyraldehyd 2,88 Gt Propionaldehyd eingesetzt. Das Produkt enthielt 2,2 Gew.-% C=C-Gruppen.

### Beispiel 1

Eine Beschichtungslösung aus
2,10 Gt des Polymeren K,
2,46 Gt eines technischen Gemischs von Pentaerythrittri- und -tetraacrylat,
0,01 Gt Phenylazodiphenylamin,
0,21 Gt 2,4-Bis-trichlormethyl-6-(4-styryl-phenyl)-s-triazin und
0,35 Gt Renolblau B2GH (C.I. 74 160) in
85,0 Gt Propylenglykolmonomethylether
wird auf eine 0,3 mm starke, in Salpetersäure elektrochemisch aufgerauhte, in Schwefelsäure anodisierte und mit einer 0,1 %igen wäßrigen Lösung von Polyvinylphosphonsäure nachbehandelte Aluminiumfolie derart aufgebracht, daß ein Trockenschichtgewicht von 1,6 g/m² erhalten wird. Die so erhaltene lichtempfindliche Schicht wird unter einer Standard-Negativvorlage 17 Sekunden mit einer MetallhalogenidLampe von 5 kW Leistung belichtet. Die belichtete Schicht zeigt einen klaren Kontrast zwischen den belichteten und unbelichteten Bereichen. Die Entwicklung erfolgt mit einer Entwicklerlösung folgender Zusammensetzung durch Reiben mit einem Plüschtampon:
5,0 Gt Natriumoctylsulfat,
1,5 Gt Natriummetasilikat x 5 H₂O und
1,0 Gt Dinatriumhydrogenphosphat x 12 H₂O in
92,5 Gt dest. Wasser.

Die nichtbelichteten Schichtbereiche werden innerhalb 15 Sekunden sauber entfernt. Die Platte wird anschließend mit Wasser abgespült. In der Kopie ist die Stufe 4 eines Silberfilm-Halbtonstufenkeils mit einem Dichteumfang von 0,05 bis 3,05 und Dichteinkrementen von 0,15 voll abgebildet. Auch feinste Raster und Linien der Vorlage werden klar wiedergegeben.

Wird statt des Polymeren K das Polymere W in gleicher Menge in der Beschichtungslösung eingesetzt, so erhält man nach 25 Sekunden Belichtung ebenfalls vier gedeckte Stufen in der Kopie.

Auf die oben hergestellte Druckplatte wird eine Schicht von Polyvinylalkohol (12 % Restacetylgruppen, K-Wert 4) so aufgebracht, daß ein Trockenschichtgewicht von 0,8 g/m² erhalten wird. Das Aufbringen der Sauerstoffsperrschicht auf die photohärtbare Schicht erhöht die Lichtempfindlichkeit um 15 %. Werden beide Platten in eine Bogenoffsetmaschine eingespannt, so zeigt sich, daß durch die Deckschicht auch eine Steigerung der Druckauflage, und zwar um ca. 150 %, erreicht werden kann.

### Beispiel 2

Aus
1,0 Gt des Polymeren L,
1,0 Gt des Umsetzungsprodukts aus 1 mol 2,4,4-Trimethyl-hexamethylendiisocyanat und 2 mol Hydroxyethylmethacrylat,
0,1 Gt 2,4-Bis-trichlormethyl-6-(4-styryl-phenyl)-s-triazin und
0,01 Gt eines blauen Azofarbstoffs, erhalten durch Kuppeln von 2,4-Dinitro-6-chlor-benzoldiazoniumsalz mit 2-Methoxy-5-acetylamino-N-cyano-ethyl-N-hydroxyethyl-anilin, in
50 Gt 2-Methoxy-ethanol
wird auf den Träger aus Beispiel 1 zu einem Trockenschichtgewicht von 1,6 g/m² aufgebracht. Die Platte wird 30 Sekunden unter einem Halbtonstufenkeil und einem Silberfilm gleichmäßiger optischer Dichte als Graufilter belichtet. Die Entwicklung erfolgt wie in Beispiel 1 mit einer Lösung von
5,0 Gt Natriumoctylsulfat,
1,0 Gt Natriummetasilikat x 5 H₂O und
94,0 Gt dest. Wasser.

Die rasch entwickelbare Platte zeigt eine gedeckte Stufe 4. In der Kopie waren die feinsten Rasterelemente der Vorlage voll wiedergegeben.

Wird statt des Polymeren L die gleiche Menge des Polymeren X eingesetzt, so erhält man bei sonst gleicher Verarbeitung ebenfalls eine Druckplatte, in der die Stufe 4 gedeckt ist.

### Beispiel 3

Aus
1,0 Gt des Polymeren M, 1,0 Gt eines technischen Gemischs aus Pentaerythrittri- und -tetraacrylat,
0,15 Gt 2-(p-Trichlormethyl-benzoylmethylen)-3-ethyl-benzthiazolin und
0,03 Gt des in Beispiel 2 angegebenen Azofarbstoffs in
50 Gt Propylenglykolmonomethylether
wird eine Lösung bereitet, die auf den Träger aus Beispiel 1 so aufgebracht wird, daß ein Trockenschichtgewicht von 1,5 g/m² erhalten wird.

Anschließend wird analog zu Beispiel 1 eine Sauerstoffsperrschicht von 0,6 g/m² aufgebracht. Belichtung und Entwicklung erfolgen analog zu Beispiel 2; die Belichtungszeit beträgt 6 Sekunden, um ein Bild analog zu Beispiel 2 zu erhalten.

Die so hergestellte Druckplatte wird nach der Belichtung eine Minute bei 100 °C behandelt und anschließend entwickelt. Im Vergleich zu der nicht nacherwärmten Druckplatte erhält man eine gedeckte Stufe 5. Die Druckauflage kann durch Nacherwärmen um ca. 100 % erhöht werden. Dieselbe Steigerung der Auflagenbeständigkeit kann durch Nachbelichten erreicht werden.

### Beispiel 4

Aus
1,0 Gt des Polymeren N,
1,5 Gt Trimethylolethantriacrylat,
0,2 Gt des in Beispiel 1 angegebenen Triazins
und
0,015 Gt Kristallviolett (C.I. 42 555) in
50 Gt Propylenglykolmonomethylether
wird eine Beschichtungslösung hergestellt, und auf den in Beispiel 1 beschriebenen Träger aufgebracht. Das Trockenschichtgewicht beträgt 1,3 g/m². Das Schichtgewicht der Sperrschicht wird auf 0,8 g/m² eingestellt. Belichtet wird 20 Sekunden mittels einer 5-kW-Metallhalogenidlampe im Abstand von 110 cm unter dem in Beispiel 1 angegebenen Belichtungskeil, auf den zusätzlich ein Silberfilm mit gleichmäßiger Schwärzung (Dichte 1,57) und gleichmäßiger Absorption über den wirksamen Spektralbereich als Graufilter montiert ist. Nach der Belichtung wird die Platte mit dem Entwickler aus Beispiel 1 entwickelt. Die nichtbelichteten Schichtbereiche werden innerhalb kurzer Zeit nach der Benetzung durch die Entwicklerflüssigkeit entfernt. Anschließend wird mit Wasser gespült und getrocknet. In der Kopie ist die Stufe 5 voll abgebildet. Auch feinste Raster und Linien der Vorlage werden klar wiedergegeben.

### Beispiel 5

Eine Beschichtungslösung aus
1,0 Gt des Polymeren O,
1,0 Gt Pentaerythrittriacrylat,
0,01 Gt Phenylazodiphenylamin,
0,1 Gt 2,4-Bis-trichlormethyl-6-(4-ethoxy-naphthyl)-s-triazin und
0,02 Gt Victoriareinblau FGA (C.I. Basic Blue 81) in
50,0 Gt Propylenglykolmonomethylether
wird auf den Träger aus Beispiel 1 so aufgebracht, daß ein Trockenschichtgewicht von 1,9 g/m² erhalten wird. Anschließend wird eine Deckschicht, wie in Beispiel 1 beschrieben, aufgebracht. Die lichtempfindliche Schicht wird unter einer Standard-Negativvorlage wie in Beispiel 1 belichtet und mit der Entwicklerlösung aus Beispiel 1 entwickelt. Die Druckform nimmt in der Bogenoffsetmaschine sofort fette Farbe an. Auch nach längerem Maschinenstillstand wird die Farbe bereits nach 2 bis 8 Bögen wieder voll angenommen. Die Platte liefert 180.000 gute Drucke, wobei auch feinste Linien noch voll wiedergegeben werden.

### Beispiel 6

Aus
3,5 Gt des Polymeren P,
3,5 Gt β-Hydroxyethylmethacrylat,
0,8 Gt Hexandiol-1,6-dimethacrylat,
0,75 Gt Benzildimethylketal und
0,10 Gt Rhodamin B (C.I. 45 170) in
75,0 Gt dest. Wasser und
30,0 Gt n-Propanol
wird eine Beschichtungslösung hergestellt, die auf den in Beispiel 1 beschriebenen Träger so aufgebracht wird, daß ein Schichtgewicht von 2,0 g/m² erhalten wird. Die Platte wird 28 Sekunden durch eine Standardnegativvorlage belichtet und anschließend durch Besprühen mit Leitungswasser entwickelt. Man erhält eine Druckplatte, in der auch feine Elemente sehr genau wiedergegeben sind. Dies spricht dafür, daß die belichteten Schichtbereiche beim Entwicklungsvorgang weder ausgewaschen werden noch zum Quellen neigen.

### Beispiel 7

Aus
1,56 Gt des Polymeren L,
0,91 Gt eines Diazoniumsalz-Polykondensationsprodukts aus 1 mol 3-Methoxy-diphenylamin-4-diazoniumsulfat und 1 mol 4,4′-Bis-methoxymethyl-diphenylether, isoliert als Mesitylensulfonat,
0,049 Gt Phosphorsäure (85 %ig),
0,162 Gt 2-(4-Methoxystyryl)-4,6-bis-trichlormethyl-s-triazin,
1,75 Gt eines technischen Gemischs aus Pentaerythrittri- und -tetraacrylat und
0,55 Gt des in Beispiel 2 angegebenen Azofarbstoffs in
77,0 Gt 2-Methoxy-ethanol
wird eine Lösung hergestellt, die auf eine elektrochemisch aufgerauhte, anodisierte und mit Polyvinylphosphonsäure behandelte Aluminiumfolie aufgetragen und zu einem Schichtgewicht von 1,8 g/m² getrocknet wird.

Die Schicht wird durch eine Negativvorlage 25 Sekunden belichtet. Die Entwicklung wird mit einer Entwicklerlösung folgender Zusammensetzung vorgenommen:
5,0 Gt Natriumoctylsulfat,
1,5 Gt Natriummetasilikat x 5 Wasser,
1,0 Gt Trinatriumphosphat x 12 Wasser und
0,5 Gt Dinatriumhydrogenphosphat x 12 Wasser in
92,0 Gt dest. Wasser.

In der Druckplatte ist die Stufe 4 des Belichtungskeils voll durchgehärtet. Sie zeichnet sich im Vergleich zu mit herkömmlichen Bindemitteln (Vergleichsbeispiel 2) hergestellten Druckplatten durch eine sehr harte Gradation aus.

Nach dem Einspannen der Druckform in eine Bogenoffsetmaschine kann beobachtet werden, daß die Druckplatte die angebotene Farbe sehr rasch annimmt. Es werden 280.000 gute Drucke erhalten.

### Beispiel 8

Aus
2,5 Gt des Polymeren M,
5,6 Gt eines technischen Gemischs aus Pentaerythrittri- und -tetraacrylat,
0,2 Gt 2-(4-methoxy-styryl)-4,6-bis-trichlormethyl-s-triazin und
0,03 Gt des in Beispiel 2 angegebenen Azofarbstoffs in
25 Gt Butanon,
2 Gt Ethanol und
1 Gt Butylacetat
wird eine Lösung bereitet, die auf eine biaxial verstreckte und thermofixierte Polyethylenterephthalatfolie der Stärke 25 µm so aufgeschleudert wird, daß nach dem Trocknen bei 100 °C ein Trockenschichtgewicht von 35 g/m² erhalten wird. Die derart hergestellte Trockenresistfolie wird mit einer Laminiervorrichtung bei 120 °C auf eine mit 35 µm starker Kupferfolie kaschierte Phenoplast-Schichtstoffplatte laminiert und 25 Sekunden unter einem handelsüblichen Belichtungsgerät belichtet. Als Vorlage dient eine Strichvorlage mit Linienbreiten und Abständen bis herab zu 80 µm. Nach der Belichtung wird die Polyesterfolie langsam abgezogen und die erhaltene Schicht mit dem in Beispiel 1 angegebenen Entwickler in einem Sprühentwicklungsgerät 90 Sekunden entwickelt. Anschließend wird 30 Sekunden mit Leitungswasser gespült, 30 Sekunden in einer 15%igen Ammoniumperoxydisulfatlösung angeätzt und anschließend in folgenden Elektrolytbädern galvanisiert:
1. 30 Minuten in einem Kupferbad der Fa. Schlötter, Geislingen/Steige, Typ "Glanzkupfer-Bad".
   Stromdichte: 2,5 A/cm².
   Metallaufbau: ca. 12,5 µm.
2. 30 Minuten in einem Nickelbad des gleichen Herstellers, Typ "Norma".
   Stromdichte: 4,0 A/cm².
   Metallaufbau: 9 µm.

Die Platte zeigt keine Beschädigungen oder Unterwanderungen. Die Entschichtung erfolgt in 5-%iger KOH-Lösung bei 50 °C. Das freigelegte Kupfer wird mit den üblichen Ätzmedien weggeätzt.

### Beispiel 9

Aus dem Polymeren Q wird analog zu Beispiel 1 zunächst eine Beschichtungslösung hergestellt, die auf den dort beschriebenen Aluminiumträger zu einem Trockenschicht - gewicht von 2 g/m² aufgebracht wird. Die lichtempfindliche Schicht wird wie in Beispiel 1 belichtet und entwickelt. Man erhält eine Druckvorlage, in der die Stufe 4 voll abgebildet ist. Auch feinste Raster und Linien der Vorlage werden klar wiedergegeben. Wird die Platte mit einer Sauerstoffsperrschicht wie in Beispiel 1 versehen, so genügt eine Belichtungszeit von 6 Sekunden, um eine durchgehärtete Stufe 4 im Belichtungskeil zu erhalten.

### Beispiel 10

Es wird eine Beschichtungslösung aus
2,3 Gt des Polymeren R,
0,35 Gt Renolblau B2GH (C.I. 74 160),
0,21 Gt des in Beispiel 7 angegebenen Triazins und
0,01 Gt Phenylazodiphenylamin in
70,0 Gt Propylenglykolmonomethylether
hergestellt und auf den in Beispiel 1 beschriebenen Träger zu einem Trockenschichtgewicht von 1,46 g/m² aufgebracht. Die lichtempfindliche Schicht wird unter einer Negativvorlage 50 Sekunden belichtet, eine Minute auf 100°C erwärmt und mit dem Entwickler aus Beispiel 7 entwickelt. Man erhält eine Kopie, in der auch feinste Elemente und Raster noch exakt wiedergegeben werden.

Die Stufe 4 des Halbtonstufenkeils ist noch voll durchgehärtet. Die Druckplatte zeichnet sich ferner durch ausgezeichnete Druckeigenschaften aus.

### Beispiel 11

Eine Beschichtungslösung aus
2,6 Gt des Polymeren N,
1,3 Gt des in Beispiel 7 angegebenen Diazoniumsalz-Polykondensationsprodukts,
0,06 Gt Phosphorsäure (85 %ig),
0,02 Gt Phenylazodiphenylamin und
0,35 Gt Victoriareinblau FGA in
80 Gt 2-Methoxy-ethanol
wird auf eine wie in Beispiel 1 vorbehandelte Aluminiumfolie so aufgebracht, daß ein Trockenschichtgewicht von 1,2 g/m² erhalten wird. Die Schicht wird 20 Sekunden wie in Beispiel 1 belichtet und wie dort entwickelt. Die nichtbelichteten Schichtbereiche werden innerhalb kurzer Zeit sauber entfernt. Die Platte wird anschließend mit Wasser abgespült und getrocknet. Auch feinste Raster und Linien der Vorlage werden klar wiedergegeben. Die erhaltene Druckplatte liefert an einer Bogenoffsetmaschine eine Druckauflage von mehr als 210.000 Bogen.

### Beispiel 12

Analog zu Beispiel 10 wird eine Beschichtungslösung hergestellt, in der allerdings das Polymere durch 1,8 Gt des Polymeren N und 0,5 Gt eines Methacrylsäure-Hexylmethacrylat-Styrol-Terpolymerisats (30:60:10 Gew.-%) ersetzt ist. Auf die Platte mit einem Trockenschichtgewicht von 1,64 g/m² wird analog Beispiel 1 eine Sauerstoffsperrschicht von 0,8 g/m² aufgeschleudert. Nach einer Belichtungszeit von 20 Sekunden wird eine Minute auf 100°C erwärmt und anschließend mit dem Entwickler aus Beispiel 1 entwickelt. Die Platte entspricht in ihren kopiertechnischen Eigenschaften der Platte aus Beispiel 10.

### Beispiel 13

Aus
6,2 Gt des Polymeren N,
2,1 Gt des in Beispiel 7 angegebenen Diazoniumsalz-Polykondensationsprodukts,
0,3 Gt Viktoriareinblau FGA (C.I. Basic Blue 81),
0,24 Gt Phosphorsäure (85 %ig),
0,24 Gt 45 %igem 2,5-Dimethylhexan-2,5-di-tert.-butylperoxid als Granulat mit Kreide (INTEROX DHBP-45-IC/G der Fa. Peroxid-Chemie GmbH) und
0,07 Gt Phenylazodiphenylamin in
257 Gt Propylenglykolmonomethylether und
93 Gt Methanol
wird auf eine wie in Beispiel 1 vorbehandelte Aluminiumfolie aufgebracht und anschließend getrocknet. Die so erhaltene Kopierschicht, die ein Schichtgewicht von 1,14 g/m² aufweist, wird unter einer Negativvorlage 25 Sekunden mit einer Metallhalogenid-Lampe von 5 kW Leistung belichtet. Die belichtete Schicht wird mit dem in Beispiel 7 angegebenen Entwickler mittels eines Plüschtampons behandelt, wobei die nichtbelichteten Schichtbereiche innerhalb von wenigen Sekunden sauber entfernt werden, und anschließend mit Wasser abgespült und getrocknet. In der Kopie ist die Stufe 4 des in Beispiel 3 angegebenen Silberfilm-Halbtonstufenkeils noch voll gedeckt.

Die Druckplatte wird in einem auf 200 °C erhitzten Umlufttrockenschrank 5 Minuten gelagert und anschließend abkühlen gelassen. Nach dem Einspannen in eine Bogenoffsetmaschine wird bei einer Auflage von 260.000 Drucken abgebrochen, obwohl die Platte noch einwandfrei druckt.

### Beispiel 14

Aus dem Polymeren S, gelöst in 2-Methoxy-ethanol, wird analog zu Beispiel 1 eine Beschichtungslösung hergestellt und verarbeitet. Das Schichtgewicht der lichtempfindlichen Schicht beträgt 2,0 g/m². Nach einer Belichtungszeit von 20 Sekunden erhält man ein ausgezeichnetes Bild, in dem die Stufe 4 des Halbtonstufenkeils voll durchgehärtet ist. Die so hergestellte Platte läßt sich durch Besprühen mit Leitungswasser tonfrei entwickeln. Wird auf die Druckplatte zusätzlich eine Sauerstoffsperrschicht von 0,8 g/m² aufgebracht,so reduziert sich die Belichtungszeit auf 3 Sekunden. Auch mit diesem Polymeren werden feine Strukturen der Filmvorlage exakt wiedergegeben.

### Beispiel 15

Aus dem Polymeren T wird analaog zu Beispiel 1 eine Beschichtungslösung hergestellt und weiterverarbeitet (Schichtgewicht 1,5 g/m²). Man erhält eine Druckplatte, bei der nach einer Belichtungszeit von 22 Sekunden die Stufe 4 des Halbtonstufenkeils gedeckt ist. Die kopiertechnischen Eigenschaften der Platte sind ausgezeichnet. Die Belichtungszeit wird durch das Aufbringen einer Sauerstoffsperrschicht auf 7 Sekunden verkürzt. Im Unterschied zu der in Beispiel 1 erhaltenen Platte kann zur Entwicklung der hier hergestellten Platte auch reines Wasser verwendet werden.

### Beispiel 16

Aus dem Polymeren U wird analog zu Beispiel 1 eine Beschichtungslösung hergestellt und verarbeitet (Schichtgewicht 1,5 g/m²). Nach einer Belichtungszeit von 25 Sekunden erhält man eine Druckplatte, in der die Stufe 4 des Halbtonstufenkeils voll durchgehärtet ist, wobei die Entwicklung mit einer Lösung analog zu Beispiel 1 vorgenommen wird. Durch Aufbringen einer Sauerstoffsperrschicht kann die Belichtungszeit auf 10 Sekunden verkürzt werden.

### Beispiel 17

Mit dem Polymeren V wird entsprechend Beispiel 1 eine Beschichtungslösung hergestellt und weiterverarbeitet (Schichtgewicht 1,7 g/m²). Nach einer Belichtungszeit von 25 Sekunden erhält man eine Druckplatte, in der die Stufe 4 eines Halbtonstufenkeils voll durchgehärtet ist, wobei die Entwicklung mit der Lösung von Beispiel 2 vorgenommen wird. Durch Aufbringen einer Sauerstoffsperrschicht kann die Belichtungszeit auf 15 Sekunden verkürzt werden.

### Vergleichsbeispiel 1

Das Polymere E wird nach der bei dem Polymeren M angegebenen Vorschrift mit n-Butyraldehyd acetalisiert. Mit diesem Polymeren wird analog zu Beispiel 1 eine Beschichtungslösung und daraus eine Druckplatte hergestellt. Gegenüber der in Beispiel 1 beschriebenen Platte, die ein erfindungsgemäßes Bindemittel mit photopolymerisierbaren Doppelbindungen enthält, ist die Lichtempfindlichkeit der Platte ohne Sauerstoffsperrschicht um 40% niedriger. Nach Aufbringen einer Sauerstoffbarriere benötigt die Vergleichsplatte sogar die siebenfache Belichtungszeit gegenüber der in Beispiel 1 beschriebenen Platte. Die erfindungsgemäßen Bindemittel führen außerdem zu einer sehr harten Gradation im Vergleich zu den gesättigten Bindemitteln.

### Vergleichsbeispiel 2

Aus 1,56 Gt des Umsetzungsproduktes aus 50 Gt eines handelsüblichen Polyvinylbutyrals mit einem Molekulargewicht von etwa 70.000 bis 80.000, das 71% Vinylbutyral-, 2% Vinylacetat- und 27% Vinylalkoholeinheiten enthält, und 4 Gt Maleinsäureanhydrid mit der Säurezahl 30 wird analog zu Beispiel 7 eine Beschichtungslösung hergestellt und verarbeitet. Um dasselbe Ergebnis wie in diesem Beispiel zu erhalten, muß die Druckplatte 35 Sekunden belichtet werden. Die Entwicklung erfolgt mit derselben Entwicklerlösung. Unter diesen Bedingungen löst sich die lichtempfindliche Schicht mit dem Vergleichspolymeren als Bindemitel trotz der darin enthaltenen Carboxylgruppen in Form von Fladen vom Träger. Dies zeigt, wie positiv die in den erfindungsgemäßen Pfropfpolymeren vorhandenen Ethergruppen die Entwickelbarkeit beeinflussen. Die erhaltene Vergleichsplatte zeichnet sich durch eine weiche Gradation aus. Von der letzten voll gedeckten Stufe an bleiben noch drei teilweise durchgehärtete Stufen stehen. Dagegen bleibt in Beispiel 7 nach der Entwicklung lediglich eine teilgehärtete Stufe zurück.

### Vergleichsbeispiel 3

In einen handelsüblichen Polyvinylalkohol mit einem Restacetylgruppen-Gehalt von ca. 1,5 % und einer Viskosität von 4 mPa·s (4 %ige wäßrige Lösung bei 20°C) werden analog zu Beispiel 6 Doppelbindungen eingeführt. Das Polymere wird in einer Beschichtungslösung entsprechend Beispiel 6 in gleicher Menge verarbeitet. Die erhaltene Platte unterscheidet sich in einigen wesentlichen Punkten von der des Beispiels 6. So ist die Farbannahme bei der Vergleichsplatte deutlich schlechter. Feine Raster werden nicht so exakt abgebildet wie in Beispiel 6, ebenso ist die Lichtempfindlichkeit geringer.

### Vergleichsbeispiel 4

Analog zu dem Polymeren O wird ein Bindemittel hergestellt. Als Ausgangspolymeres wird ein herkömmlicher Polyvinylalkohol mit einem Restacetylgruppen-Gehalt von 12% und einer Viskosität von 8 mPa·s (4%ige wäßrige Lösung bei 20°C). Das Polymere enthält 3,5 Gew.-% C=C-Gruppen.

Mit diesem Polymeren wird eine Beschichtungslösung entsprechend Beispiel 5 hergestellt. Die damit erhaltene Druckplatte zeichnet sich gegenüber der in Beispiel 5 erhaltenen Platte durch einige negative Eigenschaften aus. So kristallisiert z.B. das Polymere auf dem Aluminiumträger aus und die Platte besitzt eine sehr weiche Gradation, vor allem nach Aufbringen einer Sauerstoffsperrschicht.

### Vergleichsbeispiel 5

Das Bindemittel aus Vergleichsbeispiel 1 wird in der Formulierung von Beispiel 3 eingesetzt. Ein Vergleich der hierbei erhaltenen Platte und der Platte aus Beispiel 3 zeigt, daß durch Einführen von Doppelbindungen in das Polymere sowohl die Lichtempfindlichkeit als auch die Gradation der Platte positiv beeinflußt werden kann.

### Vergleichsbeispiel 6

Aus dem im Vergleichsbeispiel 3 verwendeten Polyvinylalkohol wird entsprechend dem Polymeren K ein Bindemittel hergestellt und in die Formulierung von Beispiel 1 eingearbeitet. Der Vergleich zwischen beiden Platten macht den Unterschied zwischen herkömmlichen Polyvinylalkoholen mit Doppelbindungen und dem erfindungsgemäßen Pfropfpolymeren mit Doppelbindungen deutlich. Die auf herkömmlichem Polyvinylalkohol basierende Platte läßt sich nicht mit dem in Beispiel 1 verwendeten Entwickler entwickeln.

## Patentansprüche

1. Pfropfpolymerisat, bestehend aus einem Polyurethan als Pfropfgrundlage und aufgepfropften Ketten, die Vinylalkoholeinheiten und Einheiten mit seitenständigen polymerisierbaren oder vernetzbaren Doppelbindungen enthalten.

2. Pfropfpolymerisat nach Anspruch 1, dadurch gekennzeichnet, daß die Einheiten mit seitenständigen Doppelbindungen Vinylester-, Vinylether oder Vinylurethaneinheiten sind.

3. Pfropfpolymerisat nach Anspruch 1, dadurch gekennzeichnet, daß die aufgepfropften Ketten ferner gesättigte Vinylestereinheiten enthalten.

4. Pfropfpolymerisat nach Anspruch 1, dadurch gekennzeichnet, daß die aufgepfropften Ketten ferner gesättigte Vinylacetaleinheiten enthalten.

5. Pfropfpolymerisat nach Anspruch 4, dadurch gekennzeichnet, daß die Vinylacetaleinheiten von einem aliphatischen oder cycloaliphatischen Aldehyd abgeleitet sind.

6. Pfropfpolymerisat nach einem der Ansprüche 1 bis 5, dadurch gekennzeichnet, daß die aufgepfropften Ketten ferner Einheiten von weiteren ethylenisch ungesättigten, mit Vinylestern copolymerisierbaren Monomeren enthalten.

7. Pfropfpolymerisat nach Anspruch 1, dadurch gekennzeichnet, daß das Polyurethan ein Polyadditionsprodukt aus Diisocyanaten und Diolen ist.

8. Pfropfpolymerisat nach Anspruch 1 oder 7, dadurch gekennzeichnet, daß das Polyurethan ein Molekulargewicht von 200 bis 100.000 hat.

9. Pfropfpolymerisat nach Anspruch 1, dadurch gekennzeichnet, daß die polymerisierbaren oder vernetzbaren Reste an den Einheiten mit seitenständigen Doppelbindungen Acryloyl- oder Methacryloylreste sind.

10. Pfropfpolymerisat nach einem der Ansprüche 1 bis 9, dadurch gekennzeichnet, daß es
0 bis 45 mol-% Vinylestereinheiten,
5 bis 97 mol-% Vinylalkoholeinheiten,
0 bis 85 mol-% Vinylacetaleinheiten und
1 bis 60 mol-% Einheiten mit polymerisierbaren oder vernetzbaren Doppelbindungen
enthält, bezogen auf die Molzahl der aufgepfropften Einheiten.

11. Lichthärtbares Gemisch, das als wesentliche Bestandteile ein Polymeres mit ethylenisch ungesättigten polymerisierbaren oder vernetzbaren Seitenketten und eine lichtempfindliche Substanz enthält, dadurch gekennzeichnet, daß das Polymere ein Pfropfpolymerisat gemäß einem der Ansprüche 1 bis 10 ist.

12. Lichthärtbares Gemisch nach Anspruch 11, dadurch gekennzeichnet, daß die lichtempfindliche Substanz eine Verbindung oder eine Verbindungskombination ist, die bei Bestrahlung mit aktinischem Licht die Polymerisation oder Vernetzung der ethylenisch ungesättigten Seitenketten einzuleiten vermag.

13. Lichthärtbares Gemisch nach Anspruch 12, dadurch gekennzeichnet, daß es zusätzlich eine niedermolekulare ethylenisch ungesättigte radikalisch polymerisierbare Verbindung enthält.

14. Lichthärtbares Gemisch nach Anspruch 11, dadurch gekennzeichnet, daß die lichtempfindliche Substanz ein Diazoniumsalz-Polykondensationsprodukt ist.

15. Lichthärtbares Gemisch nach einem der Ansprüche 12 oder 13, dadurch gekennzeichnet, daß es 20 bis 90 Gew.-% Pfropfpolymerisat, 0,05 bis 20 Gew.-% Polymerisationsinitiator und 0 bis 80 Gew.-% niedermolekulare polymerisierbare Verbindung enthält.

16. Lichthärtbares Aufzeichnungsmaterial mit einem Schichtträger und einer lichtempfindlichen Aufzeichnungsschicht, dadurch gekennzeichnet, daß die Schicht aus einem Gemisch gemäß einem der Ansprüche 11 bis 15 besteht.

## Claims

1. A graft polymer comprised of a polyurethane as the graft backbone and grafted-on chains which comprise units of vinyl alcohol and units with lateral polymerizable or crosslinkable double bonds.

2. The graft polymer as claimed in claim 1, wherein the units with lateral double bonds are vinyl ester units, vinyl ether units or vinyl urethane units.

3. The graft polymer as claimed in claim 1, wherein the grafted-on chains furthermore contain saturated vinyl ester unts.

4. The graft polymer as claimed in claim 1, wherein the grafted-on chains furthermore contain saturated vinyl acetal units.

5. The graft polymer as claimed in claim 4, wherein the vinyl acetal units are derived from an aliphatic or cycloaliphatic aldehyde.

6. The graft polymer as claimed in any of claims 1 to 5, wherein the grafted-on chains furthermore contain units of other ethylenically unsaturated monomers which are copolymerizable with vinyl esters.

7. The graft polymer as claimed in claim 1, wherein the polyurethane is a polyaddition product obtained from diisocyanates and diols.

8. The graft polymer as claimed in claim 1 or 7, wherein the polyurethane has a molecular weight between 200 and 100,000.

9. The graft polymer as claimed in claim 1, wherein the polymerizable or crosslinkable radicals on the units with lateral double bonds are acryloyl radicals or methacryloyl radicals.

10. The graft polymer as claimed in any of claims 1 to 9 wherein
0 to 45 mole % of vinyl ester units,
0 to 97 mole % of vinyl alcohol units,
0 to 85 mole % of vinyl acetal units and
1 to 60 mole % of units with polymerizable or crosslinkable double bonds
are contained, relative to the mole number of the grafted-on units.

11. A photocurable mixture which contains, as essential constituents, a polymer with ethylenically unsaturated polymerizable or crosslinkable lateral chains and a photosensitive substance, wherein said polymer is a graft polymer as claimed in any of claims 1 to 10.

12. The photocurable mixture as claimed in claim 11, wherein the photosensitive substance is a compound or a combination of compounds, which upon irradiation with actinic light is capable of initiating the polymerization or crosslinking of the ethylenically unsaturated lateral chains.

13. The photocurable mixture as claimed in claim 12, wherein a low molecular-weight, ethylenically unsaturated, free-radically polymerizable compound is additionally contained.

14. The photocurable mixture as claimed in claim 11, wherein the photosensitive substance is a diazonium salt polycondensation product.

15. The photocurable mixture as claimed in claim 12 or 13, wherein 20 to 90 % by weight of graft polymer, 0.05 to 20 % by weight of polymerization initiator and 0 to 80 % by weight of low molecular-weight, polymerizable compound are contained.

16. A photocurable recording material comprising a layer support and a photosensitive recording layer, wherein said layer is comprised of a mixture as claimed in any of claims 11 to 15.

## Revendications

1. Polymère greffé comprenant une chaîne polyuréthane sur laquelle sont greffées des chaînes comprenant des unités alcool vinylique et des unités présentant des doubles liaisons latérales réticulables ou polymérisables.

2. Polymère greffé selon la revendication 1, caractérisé en ce que les unités présentant des doubles liaisons latérales sont des unités ester vinylique, des unités éther vinylique ou des unités uréthane vinylique.

3. Polymère greffé selon la revendication 1, caractérisé en ce que les chaînes greffées contiennent en outre des unités ester vinylique saturées.

4. Polymère greffé selon la revendication 1, caractérisé en ce que les chaînes greffées contiennent en outre des unités acétale vinylique saturées.

5. Polymère greffé selon la revendication 4, caractérisé en ce que les unités acétale vinylique dérivent d'un aldéhyde aliphatique ou cycloaliphatique.

6. Polymère greffé selon l'une quelconque des revendications 1 à 5, caractérisé en ce que les chaînes greffées comprennent en outre des unités constituées d'autres monomères éthyléniques insaturés copolymérisables avec des esters vinyliques.

7. Polymère greffé selon la revendication 1, caractérisé en ce que le polyuréthane est un produit de polyaddition de diisocyanates et de diols.

8. Polymère greffé selon l'une quelconque des revendications 1 ou 7, caractérisé en ce que le polyuréthane a un poids moléculaire de 200 à 100.000.

9. Polymère greffé selon la revendication 1, caractérisé en ce que les radicaux polymérisables ou réticulables des unités présentant les doubles liaisons latérales sont des radicaux acryloyles ou des radicaux méthacryloyles.

10. Polymère greffé selon l'une quelconque des revendications 1 à 9, caractérisé en ce qu'il contient :
de 0 à 45% en modes d'unité ester vinylique
de 5 à 97% en moles d'unité alcool vinylique
de 0 à 85% en moles d'unité acétale vinylique
de 1 à 60% en moles d'unité présentant des doubles liaisons polymérisables ou réticulables, les pourcentages étant rapportés au nombre de moles d'unités greffées.

11. Mélange photodurcissable contenant comme constituants principaux un polymère présentant des chaînes latérales réticulables ou polymérisables éthyléniques insaturées et une substance photosensible, caractérisé en ce que le polymère est un polymère greffé selon l'une quelconque des revendications 1 à 10.

12. Mélange photodurcissable selon la revendication 11, caractérisé en ce que la substance photosensible est un composé ou une combinaison de composés qui permet d'initiation de la podymérisation ou de la réticulation des chaînes latérales éthydéniques insaturées par irradiation sous lumière actinique.

13. Mélange photodurcissable selon la revendication 12, caractérisé en ce qu'il contient en outre un composé éthylénique insaturé de bas poids moléculaire polymérisable par voie radicalaire.

14. Mélange photodurcissable selon la revendication 11, caractérisé en ce que la substance photosensible est un produit de polycondensation de sel de diazonium.

15. Mélange photodurcissable selon d'une quelconque des revendications 12 ou 13, caractérisé en ce que il contient de 20 à 90% en poids de polymère greffé, de 0,05 à 20% en poids d'initiateur de polymérisation et de 0 à 80% en poids d'un composé polymérisable de bas poids moléculaire.

16. Matériau d'enregistrement photodurcissable comprenant un support de couche et une couche d'enregistrement photosensible, caractérisé en ce que la couche est constituée d'un mélange selon l'une quelconque des revendications 11 à 15.
